# EUROPEAN PATENT APPLICATION

(11) **EP 3 757 180 A1**
(43) Date of publication of application: **30.12.2020**
(21) Application number: 19757732.3
(22) Date of filing: 20.02.2019
(51) Int. Cl.: C09D 101/00, B05D 3/12, B05D 7/24, B32B 23/02, C08B 5/00, C08B 15/04, C08K 5/19, C08L 1/02, C08L 101/00, C09D 7/63

(54) **MANUFACTURING METHOD FOR FIBROUS CELLULOSE-CONTAINING COATING, RESIN COMPOSITION, COATING, AND LAMINATE**

(30) Priority: 23.02.2018 JP 2018030809
(71) Applicant: Oji Holdings Corporation, Chuo-ku Tokyo 104-0061 (JP)
(72) Inventor: TODOROKI Yusuke, Tokyo 104-0061 (JP); ZHAO Mengchen, Tokyo 104-0061 (JP); NOGUCHI Yuichi, Tokyo 104-0061 (JP)
(74) Representative: Godemeyer Blum Lenze Patentanwälte Partnerschaft mbB - werkpatent
(86) International application number: PCT/JP2019/006197
(87) International publication number: WO 2019/163797

(57) **Abstract**

The present invention is intended to provide a resin composition capable of suppressing separation between ultrafine cellulose fibers and a resin, and also capable of forming a film having excellent adhesiveness to a base material. The present invention relates to a method for producing a cellulose fiber-containing film, comprising: mixing cellulose fibers having a fiber width of 1000 nm or less with organic onium; mixing the cellulose fiber mixture obtained in the mixing step, an organic solvent and a resin to obtain a resin composition; and applying the resin composition onto a base material, wherein the cellulose fibers have anionic groups, and the content of the anionic groups is 0.50 mmol/g or more, and the content of the cellulose fibers in the resin composition is 1% by mass or more.

## Description

### Technical Field

The present invention relates to a method for producing a cellulose fiber-containing film, and a resin composition, a film and a laminate.

### Background Art

Conventionally, cellulose fibers have been broadly utilized in clothes, absorbent articles, paper products, and the like. As cellulose fibers, ultrafine cellulose fibers having a fiber diameter of 1 µm or less have been known, as well as cellulose fibers having a fiber diameter of 10 µm or more and 50 µm or less. Such ultrafine cellulose fibers have attracted attention as novel materials, and the intended use thereof has been highly diversified. For example, the development of sheets or resin composites comprising the ultrafine cellulose fibers has been promoted.

In general, ultrafine cellulose fibers are stably dispersed in an aqueous solvent. On the other hand, when a composite comprising ultrafine cellulose fibers and a resin is produced, uniform dispersion of the ultrafine cellulose fibers and the resin component is required. Hence, in order to enhance the affinity between the ultrafine cellulose fibers and the resin component, a method of adding a surfactant such as an organic alkali to a composition comprising the ultrafine cellulose fibers and the resin component has been studied. For example, Patent Document 1 discloses an ultrafine cellulose fiber composite formed by adsorption of a surfactant on ultrafine cellulose fibers having carboxyl groups. In the Examples of Patent Document 1, ultrafine cellulose fibers were melt-kneaded with a resin, and the content of the ultrafine cellulose fibers in the thus obtained composite material was 0.5% by mass or less.

Moreover, Patent Document 2 discloses a cellulose nanofiber-dispersed solution formed by dispersing cellulose nanofibers, in which linear or branched molecules having an average molecular weight of 300 or more bind to cellulose molecules via carboxyl groups and amino groups, in a dispersion medium. In the Examples of Patent Document 2, a cellulose nanofiber-dispersed solution was mixed with polylactic acid to produce a cellulose nanofiber composite film.

As a resin composite, a laminate obtained by laminating a layer containing ultrafine cellulose fibers on a base material layer has been known. For example, Patent Document 3 discloses a laminate comprising a base material, and an anchor layer and an ultrafine cellulose fiber layer comprising ultrafine cellulose fibers having carboxyl groups that are established on one surface of the base material in this order. Herein, it is studied to enhance the adhesiveness of the layer comprising ultrafine cellulose fibers to the base material by allowing the anchor layer to comprise a resin having carboxyl groups, sulfonic acid groups, amino groups or hydroxyl groups.

### Prior Art Documents

### Patent Documents

Patent Document 1: Japanese Patent Publication No. 2011-140738 A
Patent Document 2: International Publication WO2013/077354
Patent Document 3: International Publication WO2012/070441

### Summary of Invention

### Object to be Solved by the Invention

A coating film formed from a resin composition comprising ultrafine cellulose fibers desirably closely adheres to a base material. The present inventors have conducted studies regarding a resin composition comprising ultrafine cellulose fibers, and as a result, the inventors have found out that when a resin composition comprising ultrafine cellulose fibers is applied to a base material, etc., the resin composition may not fit well with the base material, so that a film could not be formed on the base material or the adhesiveness between the film and the base material could not be sufficiently obtained.

Hence, it is an object of the present invention to provide a resin composition capable of forming a film having excellent adhesiveness to a base material.

### Means for Solving the Object

As a result of intensive studies directed towards achieving the aforementioned object, the present inventors have found that, in a resin composition comprising ultrafine cellulose fibers, organic onium ions, a resin and an organic solvent, by setting the content of the ultrafine cellulose fibers to be a predetermined amount or more, a film having excellent adhesiveness to a base material can be formed, thereby completing the present invention.

Specifically, the present invention has following configurations.
[1] A method for producing a cellulose fiber-containing film, comprising:
   mixing cellulose fibers having a fiber width of 1000 nm or less with organic onium;
   mixing the cellulose fiber mixture obtained in the mixing step, an organic solvent and a resin to obtain a resin composition; and
   applying the resin composition onto a base material, wherein
   the cellulose fibers have anionic groups, and the content of the anionic groups is 0.50 mmol/g or more, and
   the content of the cellulose fibers in the resin composition is 1% by mass or more.
[2] The method for producing a cellulose fiber-containing film according to [1], wherein the organic onium satisfies at least one condition selected from the following (a) and (b):
   (a) containing a hydrocarbon group having 4 or more carbon atoms, and
   (b) having a total carbon number of 16 or more.
[3] A resin composition comprising cellulose fibers having a fiber width of 1000 nm or less, organic onium ions, a resin, and an organic solvent, wherein
   the cellulose fibers have anionic groups, and the content of the anionic groups is 0.50 mmol/g or more,
   the content of the cellulose fibers is 1% by mass or more, with respect to the total mass of the resin composition, and
   the content of water is less than 10% by mass, with respect to the total mass of the resin composition.
[4] The resin composition according to [3], wherein the organic onium ions satisfy at least one condition selected from the following (a) and (b):
   (a) containing a hydrocarbon group having 4 or more carbon atoms, and
   (b) having a total carbon number of 16 or more.
[5] The resin composition according to [3] or [4], wherein a G value calculated according to the following equation is 0.9 or less: $G value = \left(Surface tension \left(mN/m\right) of resin composition\right) / ( surface tension$ (mN/m) of organic solvent component comprised in resin composition).
[6] A film comprising cellulose fibers having a fiber width of 1000 nm or less, organic onium ions, and a resin, wherein
   the cellulose fibers have anionic groups, and the content of the anionic groups is 0.50 mmol/g or more, and
   the content of the cellulose fibers is 4% by mass or more, with respect to the total mass of the film.
[7] The film according to [6], wherein the content of the organic onium ions is 4% by mass or more, with respect to the total mass of the film.
[8] The film according to [6] or [7], wherein the organic onium ions satisfy at least one condition selected from the following (a) and (b):
   (a) containing a hydrocarbon group having 4 or more carbon atoms, and
   (b) having a total carbon number of 16 or more.
[9] A laminate obtained by forming the film according to any one of [6] to [8] on at least one surface of a base material.

### Effects of Invention

By using the resin composition of the present invention, a film having excellent adhesiveness to a base material can be formed.

### Brief Description of Drawings

Figure 1 is a graph showing the relationship between the amount of NaOH added dropwise to a fiber raw material having phosphoric acid groups and electrical conductivity.
Figure 2 is a graph showing the relationship between the amount of NaOH added dropwise to a fiber raw material having carboxyl groups and electrical conductivity.
Figure 3 is a cross-sectional view illustrating the structure of a laminate having a base material and a film.

### Embodiments of Carrying out the Invention

Hereinafter, the present invention will be described in detail. The description for components described below will be based on representative embodiments or specific examples; however, the present invention will not be limited to such embodiments.

### (Resin composition)

The present invention relates to a resin composition comprising cellulose fibers having a fiber width of 1000 nm or less, organic onium ions, a resin, and an organic solvent. Herein, the cellulose fibers have anionic groups, and the content of the anionic groups is 0.50 mmol/g or more. In addition, the content of the cellulose fibers is 1% by mass or more, with respect to the total mass of the resin composition, whereas the content of water is less than 10% by mass, with respect to the total mass of the resin composition. Besides, in the present description, the cellulose fibers having a fiber width of 1000 nm or less may also be referred to as "ultrafine cellulose fibers."

Since the resin composition of the present invention has the above-described configuration, separation between the ultrafine cellulose fibers and the resin can be suppressed, even in a case where the resin composition is applied onto the base material to form a film. When the ultrafine cellulose fibers are separated from the resin in the resin composition, a fine uneven structure is formed on the film due to aggregation of the ultrafine cellulose fibers, etc. In the present invention, however, such separation between ultrafine cellulose fibers and a resin is suppressed, and thereby, a film having a smooth surface can be formed. Accordingly, a film having high adhesiveness to a base material can be formed.

In general, in the case of a resin composition comprising ultrafine cellulose fibers, in order to suppress aggregation of the ultrafine cellulose fibers, the concentration of the ultrafine cellulose fibers is set to be low. In addition, in the step of preparing such a resin composition, it is often difficult to set the concentration of ultrafine cellulose fibers to be high. However, the present inventors have tried to be set the content of the ultrafine cellulose fibers to be high, and have set it to be 1% by mass or more with respect to the total mass of the resin composition, so that the inventors have succeeded in suppressing separation between the ultrafine cellulose fibers and the resin, even in the case of forming a film. It is considered that this has been done because the entangled structure of ultrafine cellulose fibers and a resin is easily maintained in a resin composition or a film by enhancing the content of the ultrafine cellulose fibers in the resin composition to a predetermined value or more, and thereby, separation or localization of individual components can be suppressed. That is to say, in the resin composition or the film of the present invention, the ultrafine cellulose fibers are uniformly dispersed.

The ultrafine cellulose fiber-containing film (which is also simply referred to as a "film") formed from the resin composition of the present invention is a layer that covers at least one surface of a base material. Preferably, such a film strongly adheres to the base material. In other words, preferably, such a film is not easily peeled from the base material. Thus, the present film is preferably a film that does not have peelability from the base material.

The content of the ultrafine cellulose fibers may be 1% by mass or more, with respect to the total mass of the resin composition, and it is preferably 1.2% by mass or more, more preferably 1.5% by mass or more, and further preferably 2.0% by mass or more. On the other hand, the content of the ultrafine cellulose fibers is preferably 30% by mass or less, and more preferably 20% by mass or less, with respect to the total mass of the resin composition. By setting the content of the ultrafine cellulose fibers within the above-described range, separation between the ultrafine cellulose fibers and the resin can be suppressed in the resin composition. In addition, by setting the content of the ultrafine cellulose fibers within the above-described range, a film having high adhesiveness to the base material can be formed.

The content of the ultrafine cellulose fibers in the resin composition is a value calculated by dividing the mass of the ultrafine cellulose fibers by the mass of the resin composition. However, the mass of the ultrafine cellulose fibers is defined to be a mass when the counterions of the anionic groups possessed by the ultrafine cellulose fibers are hydrogen ions (H⁺). Herein, the mass of the ultrafine cellulose fibers is measured by the following method. First, the ultrafine cellulose fibers are extracted according to a suitable method. For example, when the ultrafine cellulose fibers are composited with the resin, the ultrafine cellulose fibers are extracted by treating the fibers with a solvent that selectively dissolves only the resin therein. Thereafter, the components existing as counterions of the anionic groups possessed by the ultrafine cellulose fibers are selectively extracted in the form of salts by performing an acid treatment. A solid content remaining after completion of these operations is considered to be the mass of the ultrafine cellulose fibers.

The resin composition of the present invention comprises organic onium ions, and in this case, at least a portion of the organic onium ions is present as counterions of the anionic groups possessed by the ultrafine cellulose fibers.

The content of the organic onium ions is preferably 1.0% by mass or more, more preferably 1.5% by mass or more, and further preferably 2.0% by mass or more, with respect to the total mass of the resin composition. On the other hand, the content of the organic onium ions is preferably 30% by mass or less, and more preferably 20% by mass or less, with respect to the total mass of the resin composition. By setting the content of the organic onium ions within the above-described range, the adhesiveness of the film formed from the resin composition to the base material can be more effectively enhanced.

In the present description, the content of the organic onium ions in the resin composition is a value calculated by dividing the mass of the organic onium ions by the mass of the resin composition. Herein, the mass of the organic onium ions can be measured by tracking atoms typically contained in the organic onium ions. Specifically, when the organic onium ions are ammonium ions, the amount of nitrogen atoms is measured. When the organic onium ions are phosphonium ions, the amount of phosphorus atoms is measured. Besides, when the ultrafine cellulose fibers comprise nitrogen atoms or phosphorus atoms, as well as the organic onium ions, a method of extracting only the organic onium ions, for example, an extraction operation using an acid may be performed, and the amount of the desired atoms may be then measured.

In the resin composition of the present invention, the content of water is preferably as low as possible. The content of water in the resin composition may be less than 10% by mass, with respect to the total mass of the resin composition , and it is preferably 5% by mass or less, and more preferably 1% by mass or less. Also, the content of water in the resin composition is preferably 0% by mass.

The G value calculated of the resin composition of the present invention according to the following equation is preferably 0.90 or less, more preferably 0.89 or less, and further preferably 0.88 or less. On the other hand, the G value is preferably 0.10 or more, more preferably 0.20 or more, and further preferably 0.30 or more. $G value = \left(Surface tension \left(mN/m\right) of resin composition\right) / \left(surface tension \left(mN/m\right) of organic solvent component comprised in resin composition\right)$

In order to set the G value within the above-described range, it is necessary to set the surface tension of the resin composition to be somewhat low. In the resin composition of the present invention, it is considered that the power of attraction between solvent molecules is alleviated by the mediation of the ultrafine cellulose fibers having organic onium as counterions, and as a result, the surface tension of the resin composition becomes low. Thus, by setting the G value within the above-described range, the wettability of the resin composition to the base material can be improved, and the coating properties of the resin composition can be enhanced. Thereby, a film having high adhesiveness to the base material can be obtained. It is to be noted that the surface tension of the resin composition is a value measured under conditions of a sample temperature of 23°C. The surface tension of the organic solvent component contained in the resin composition can be measured, for example, by recovering only the organic solvent component from the resin composition according to distillation. The measurement apparatus used may be, for example, SURFACE TENSIOMETER CBVP-A3 manufactured by Kyowa Interface Science, Inc.

The uniform dispersibility of the ultrafine cellulose fibers and the resin in the resin composition and the improvement of the adhesiveness of the film formed from the resin composition to the base material can be achieved by setting the amount of the anionic groups in the ultrafine cellulose fibers and the content of the ultrafine cellulose fibers within appropriate ranges. In order to enhance the wettability of the resin composition to the base material, it is also important to select, as appropriate, the type of the organic solvent, the content of the organic onium ions, the type of the resin, the content of the resin, and the type of the base material.

### (Ultrafine cellulose fibers)

The resin composition of the present invention comprises cellulose fibers having a fiber width of 1000 nm or less (ultrafine cellulose fibers). The fiber width of cellulose fibers can be measured, for example, by electron microscopic observation.

The average fiber width of the cellulose fibers is, for example, 1000 nm or less. For example, the average fiber width is preferably 2 nm or more and 1000 nm or less, more preferably 2 nm or more and 100 nm or less, further preferably 2 nm or more and 50 nm or less, and particularly preferably 2 nm or more and 10 nm or less. When the average fiber width of the cellulose fibers is set to be 2 nm or more, dissolution of the cellulose fibers as cellulose molecules in water is suppressed, and the effects of the cellulose fibers, such as the improvement of strength, rigidity, and dimensional stability, can be easily expressed. It is to be noted that the cellulose fibers are, for example, monofibrous cellulose.

The average fiber width of cellulose fibers is measured as follows, for example, using an electron microscope. First, an aqueous suspension of cellulose fibers having a concentration of 0.05% by mass or more and 0.1% by mass or less is prepared, and this suspension is casted onto a hydrophilized carbon film-coated grid as a sample for TEM observation. If the sample contains wide fibers, SEM images of the surface of the suspension casted onto glass may be observed. Subsequently, the sample is observed using electron microscope images taken at a magnification of 1000x, 5000x, 10000x, or 50000x, depending on the widths of fibers used as observation targets. However, the sample, the observation conditions, and the magnification are adjusted so as to satisfy the following conditions:
(1) A single straight line X is drawn in any given portion in an observation image, and 20 or more fibers intersect with the straight line X.
(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. Three or more sets of observation images of surface portions, which are at least not overlapped, are obtained. Thereafter, the widths of the fibers intersecting the straight line X and the straight line Y are read in each image. Thereby, at least 120 fiber widths (20 fibers × 2 × 3 = 120) are thus read. The average value of the read fiber widths is defined to be the average fiber width of cellulose fibers.

The fiber length of the cellulose fibers is not particularly limited, and for example, it is preferably 0.1 µm or more and 1000 µm or less, more preferably 0.1 µm or more and 800 µm or less, and further preferably 0.1 µm or more and 600 µm or less. By setting the fiber length within the above-described range, destruction of the crystalline region of the cellulose fibers can be suppressed. In addition, the viscosity of a slurry of the cellulose fibers can also be set within an appropriate range. It is to be noted that the fiber length of the cellulose fibers can be obtained by an image analysis using TEM, SEM or AFM.

The cellulose fibers preferably have a type I crystal structure. Herein, the fact that the cellulose fibers have a type I crystal structure may be identified by a diffraction profile obtained from a wide angle X-ray diffraction photograph using CuKα (λ = 1.5418 Å) monochromatized with graphite. Specifically, it may be identified based on the fact that there are typical peaks at two positions near 2θ = 14° or more and 17° or less, and near 2θ = 22° or more and 23° or less.

The percentage of the type I crystal structure occupied in the ultrafine cellulose fibers is, for example, preferably 30% or more, more preferably 40% or more, and further preferably 50% or more. Thereby, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The aspect ratio (fiber length/fiber width) of the cellulose fibers is not particularly limited, and for example, it is preferably 20 or more and 10000 or less, and more preferably 50 or more and 1000 or less. By setting the aspect ratio at the above-described lower limit value or more, a film comprising ultrafine cellulose fibers and having excellent adhesiveness to a base material is easily formed. Moreover, sufficient thickening properties are easily obtained upon production of a slurry. By setting the aspect ratio at the above-described upper limit or less, when the cellulose fibers are treated, for example, as a dispersed solution in water or in an organic solvent, operations such as dilution are preferably easily handled.

The cellulose fibers in the present embodiment have, for example, both a crystalline region and an amorphous region. In particular, ultrafine cellulose fibers, which have both a crystalline region and an amorphous region and also have a high aspect ratio, are realized by the after-mentioned method for producing ultrafine cellulose fibers.

Cellulose fibers have anionic groups. The anionic group is preferably at least one selected from, for example, a phosphoric acid group or a phosphoric acid group-derived substituent (which is simply referred to as a "phosphoric acid group" at times), a carboxyl group or a carboxyl group-derived substituent (which is simply referred to as a "carboxyl group" at times), and a sulfone group or a sulfone group-derived substituent (which is simply referred to as a "sulfone group" at times). The anionic group is more preferably at least one selected from a phosphoric acid group and a carboxyl group; and is particularly preferably a phosphoric acid group. If cellulose fibers have phosphoric acid groups, a film having high transparency, in which coloration is suppressed, can be easily obtained.

The phosphoric acid group is a divalent functional group corresponding to, for example, a phosphoric acid from which a hydroxyl group is removed. Specifically, it is a group represented by -PO₃H₂. The phosphoric acid group-derived substituents include substituents, such as salts of phosphoric acid groups and phosphoric acid ester groups. Besides, the phosphoric acid group-derived substituents may be comprised as condensed phosphoric acid groups (for example, pyrophosphoric acid groups) in the cellulose fibers.

The phosphoric acid group or the phosphoric acid group-derived substituent may be a substituent represented by, for example, the following Formula (1).

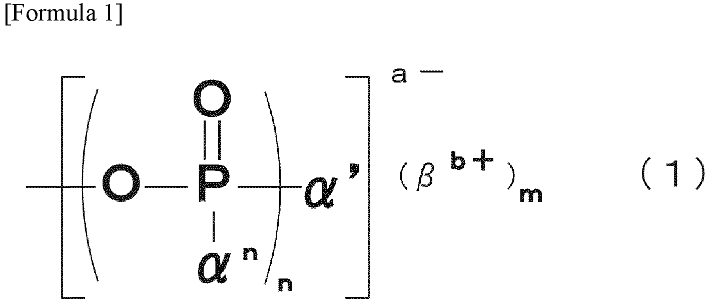

In the above Formula (1), a, b, and n each represent a natural number (provided that a = b x m); an "a" number of α¹, α², ..., αⁿ and α' is O⁻, and the rest is either R or OR. All of αⁿ and α' may also be O⁻. R each represents a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an unsaturated cyclic hydrocarbon group, an aromatic group, or a derivative group thereof. Besides, at least a portion of β^{b+} is an organic onium ion as described later.

Examples of the saturated straight chain hydrocarbon group may include a methyl group, an ethyl group, an n-propyl group, and an n-butyl group, but are not particularly limited thereto. Examples of the saturated branched chain hydrocarbon group may include an i-propyl group and a t-butyl group, but are not particularly limited thereto. Examples of the saturated cyclic hydrocarbon group may include a cyclopentyl group and a cyclohexyl group, but are not particularly limited thereto. Examples of the unsaturated straight chain hydrocarbon group may include a vinyl group and an allyl group, but are not particularly limited thereto. Examples of the unsaturated branched chain hydrocarbon group may include an i-propenyl group and a 3-butenyl group, but are not particularly limited thereto. Examples of the unsaturated cyclic hydrocarbon group may include a cyclopentenyl group and a cyclohexenyl group, but are not particularly limited thereto. Examples of the aromatic group may include a phenyl group and a naphthyl group, but are not particularly limited thereto.

Moreover, examples of the derivative group of the R may include functional groups such as a carboxyl group, a hydroxyl group or an amino group, in which at least one type selected from the functional groups is added to or substituted with the main chain or side chain of the above-described various types of hydrocarbon groups, but are not particularly limited thereto. Furthermore, the number of carbon atoms constituting the main chain of the above-described R is not particularly limited, and it is preferably 20 or less, and more preferably 10 or less. By setting the number of carbon atoms constituting the main chain of the R within the above-described range, the molecular weight of phosphoric acid groups can be adjusted in a suitable range, permeation thereof into a fiber raw material can be facilitated, and the yield of the ultrafine cellulose fibers can also be enhanced.

β^{b+} is a mono- or more-valent cation consisting of an organic or inorganic matter. Examples of the mono- or more-valent cation consisting of an organic matter may include an aliphatic ammonium and an aromatic ammonium, and at least a portion of β^{b+} is an organic onium ion as described later. Examples of the mono- or more-valent cation consisting of an inorganic matter may include alkali metal ions such as sodium, potassium or lithium ions, divalent metal cations such as calcium or magnesium ions, and hydrogen ions, but are not particularly limited thereto. These can be applied alone as a single type or in combination of two or more types. As such mono- or more-valent cations consisting of an organic or inorganic matter, sodium or potassium ions, which hardly cause the yellowing of a fiber raw material containing β upon heating and are industrially easily applicable, are preferable, but are not particularly limited thereto.

The amount of anionic groups introduced into the cellulose fibers is, per 1 g (mass) of the cellulose fibers, preferably 0.50 mmol/g or more, more preferably 0.70 mmol/g or more, and further preferably 1.00 mmol/g or more. On the other hand, the amount of anionic groups introduced into the cellulose fibers is, for example, per 1 g (mass) of the cellulose fibers, preferably 3.65 mmol/g or less, more preferably 3.50 mmol/g or less, and further preferably 3.00 mmol/g or less. By setting the amount of anionic groups introduced within the above-described range, it may become easy to perform fibrillation on the fiber raw material, and the stability of the cellulose fibers can be enhanced. In addition, by setting the amount of anionic groups introduced within the above-described range, separation between the ultrafine cellulose fibers and the resin in the resin composition can be suppressed.

Herein, the unit mmol/g indicates the amount of substituents per 1 g (mass) of the cellulose fibers, when the counterions of the anionic groups are hydrogen ions (H⁺).

The amount of anionic groups introduced into the cellulose fibers may be measured, for example, by a conductometric titration method. In the measurement according to the conductometric titration method, while an alkali such as a sodium hydroxide aqueous solution is added to the obtained slurry containing the cellulose fibers, a change in the electrical conductivity is obtained, so that the amount of anionic groups introduced can be measured.

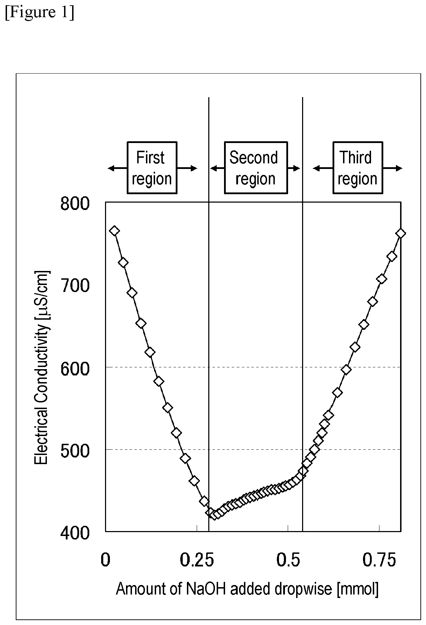

Figure 1 is a graph showing the relationship between the amount of NaOH added dropwise to cellulose fibers having phosphoric acid groups and electrical conductivity. The amount of the phosphoric acid groups introduced into the cellulose fibers is measured, for example, as follows. First, a slurry containing cellulose fibers is treated with a strongly acidic ion exchange resin. Before the treatment with the strongly acidic ion exchange resin, the same defibration treatment as the after-mentioned defibration treatment may be performed on the cellulose fibers, as necessary. Subsequently, while adding a sodium hydroxide aqueous solution, a change in the electrical conductivity is observed, and a titration curve as shown in Figure 1 is obtained. As shown in Figure 1, first, the electrical conductivity is rapidly reduced (hereinafter, this region is referred to as a "first region"). Then, the conductivity starts rising slightly (hereinafter, this region is referred to as a "second region"). Then, the increment of the conductivity is further increased (hereinafter, this region is referred to as a "third region"). The boundary point between the second region and the third region is defined as a point at which a change amount in the two differential values of conductivity, namely, an increase in the conductivity (inclination) becomes maximum. Thus, three regions appear in the titration curve. Among them, the amount of the alkali required for the first region among these regions is equal to the amount of a strongly acidic group in the slurry used in the titration, and the amount of the alkali required for the second region is equal to the amount of a weakly acidic group in the slurry used in the titration. When condensation of a phosphoric acid group occurs, the weakly acidic group is apparently lost, so that the amount of the alkali required for the second region is decreased as compared with the amount of the alkali required for the first region. On the other hand, the amount of the strongly acidic group agrees with the amount of the phosphorus atom regardless of the presence or absence of condensation. Hence, the simple term "the amount of the phosphoric acid group introduced (or the amount of the phosphoric acid group)" or "the amount of the substituent introduced (or the amount of the substituent)" refers to the amount of the strongly acidic group. Therefore, the value obtained by dividing the amount (mmol) of the alkali required for the first region in the titration curve as obtained above by the solid content (g) in the slurry as a titration target becomes the amount (mmol/g) of the phosphoric acid groups introduced.

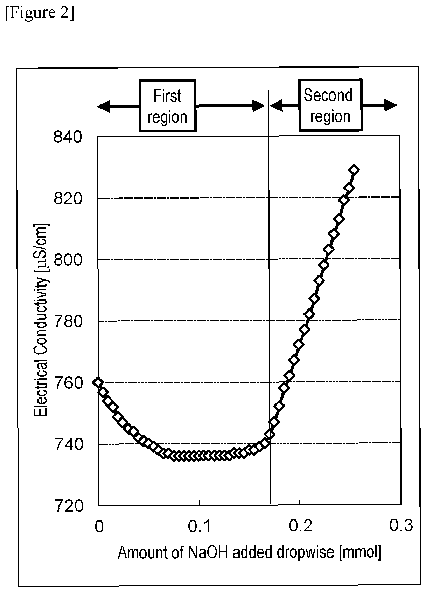

Figure 2 is a graph showing the relationship between the amount of NaOH added dropwise to cellulose fibers having carboxyl groups and electrical conductivity. The amount of the carboxyl groups introduced into the cellulose fibers is measured, for example, as follows. First, a slurry containing cellulose fibers is treated with a strongly acidic ion exchange resin. Before the treatment with the strongly acidic ion exchange resin, the same defibration treatment as the after-mentioned defibration treatment may be performed on the cellulose fibers, as necessary. Subsequently, while adding a sodium hydroxide aqueous solution, a change in the electrical conductivity is observed, and a titration curve as shown in Figure 2 is obtained. As shown in Figure 2, the titration curve is divided into a first region that corresponds to until an increment (inclination) in the electric conductivity becomes almost constant after the electric conductivity has been reduced, and a second region that corresponds to until an increment (inclination) in the conductivity is increased. It is to be noted that the boundary point between the first region and the second region is defined as a point at which the second-order differential value of the conductivity, namely, the amount of change in the increment (inclination) in the conductivity, becomes maximum. The value obtained by dividing the amount (mmol) of the alkali required for the first region in the titration curve by the solid content (g) in the ultrafine cellulose fiber-containing slurry as a titration target is defined to be the amount (mmol/g) of carboxyl groups introduced.

It is to be noted that the aforementioned amount (mmol/g) of carboxyl groups introduced indicates the amount of substituents per 1 g (mass) of cellulose fibers when the counterions of the carboxyl groups are hydrogen ions (H⁺) (hereinafter referred to as "the amount of carboxyl group (acid type)"). On the other hand, when the counterions of carboxyl groups are substituted with any given cations C to achieve charge equivalent, the denominator is converted to the mass of cellulose fibers in which cations C are counterions, so that the amount of carboxyl groups possessed by the cellulose fibers in which the cations C are counterions (hereinafter referred to as "the amount of carboxyl groups (C type)") can be obtained.

Specifically, the amount of carboxyl groups introduced is calculated according to the following equation: $Amount of carboxyl groups \left(C type\right) introduced = amount of carboxyl groups \left(acid type\right) / \left\{1+\left(W-1\right)\times \left(amount of carboxyl groups \left(acid type\right)\right)/1000\right\} .$

In the equation, W indicates formula weight per valence of cations C (for example, Na: 23; and Al: 9).

### < Step of producing ultrafine cellulose fibers >

### < Fiber raw material >

Ultrafine cellulose fibers are produced from a fiber raw material comprising cellulose. Such a fiber raw material comprising cellulose is not particularly limited, and pulp is preferably used from the viewpoint of availability and inexpensiveness. Examples of the pulp may include wood pulp, non-wood pulp, and deinked pulp. Examples of the wood pulp may include, but are not particularly limited to, chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP); semichemical pulps such as semi-chemical pulp (SCP) and chemi-ground wood pulp (CGP); and mechanical pulps such as ground pulp (GP) and thermomechanical pulp (TMP, BCTMP). Examples of the non-wood pulp may include, but not particularly limited to, cotton pulps such as cotton linter and cotton lint; and non-wood type pulps such as hemp, wheat straw, and bagasse. An example of a deinked pulp may be, but is not particularly limited to, a deinked pulp using waste paper as a raw material. The pulp of the present embodiment may be used alone as a single type, or in combination of two or more types.

Among the above-listed pulps, for example, wood pulp and deinked pulp are preferable from the viewpoint of easy availability. Moreover, among wood pulps, for example, chemical pulp is more preferable, and kraft pulp and sulfite pulp are further preferable, from the viewpoint that it has a higher cellulose content ratio so as to enhance the yield of ultrafine cellulose fibers upon the defibration treatment, and that decomposition of cellulose in the pulp is mild, so that ultrafine cellulose fibers having a long fiber length with a high aspect ratio can be obtained.

As a fiber raw material comprising cellulose, for example, cellulose comprised in Ascidiacea, or bacterial cellulose generated by acetic acid bacteria can also be utilized. In addition fibers formed from straight-chain nitrogen-containing polysaccharide polymers such as chitin and chitosan can also be used, instead of a fiber raw material containing cellulose.

### < Phosphoric acid group introduction step >

When the ultrafine cellulose fibers have phosphoric acid groups, the step of producing the ultrafine cellulose fibers includes a phosphoric acid group introduction step. The phosphoric acid group introduction step is a step of allowing at least one compound selected from compounds capable of reacting with hydroxyl groups possessed by a fiber raw material comprising cellulose and thereby introducing phosphoric acid groups into the fiber raw material (hereinafter also referred to as "Compound A") to act on the fiber raw material comprising cellulose. By this step, phosphoric acid group-introduced fibers can be obtained.

In the phosphoric acid group introduction step according to the present embodiment, the reaction of the fiber raw material comprising cellulose with Compound A may be carried out in the presence of at least one type selected from urea and a derivative thereof (hereinafter also referred to as "Compound B"). Otherwise, the reaction of the fiber raw material comprising cellulose with Compound A may also be carried out in the absence of Compound B.

One example of the method of allowing Compound A to act on the fiber raw material in the presence of Compound B may include a method of mixing Compound A and Compound B into the fiber raw material that is in a dry or wet state, or in a slurry state. Among the fiber raw materials in these states, because of the high uniformity of the reaction, the fiber raw material that is in a dry or wet state is preferably used, and the fiber raw material in a dry state is particularly preferably used. The shape of the fiber raw material is not particularly limited, and for example, a cotton-like or thin sheet-like fiber raw material is preferable. Compound A and Compound B may be added to the fiber raw material by the method of adding Compound A and Compound B that are dissolved in a solvent to form a solution, or are melted by being heated to a melting point or higher. Among these, because of the high uniformity of the reaction, the compounds are preferably added to the fiber raw material, in the form of a solution obtained by dissolution thereof in a solvent, or in particular, in the form of an aqueous solution. Moreover, Compound A and Compound B may be simultaneously added, or may also be added, separately. Alternatively, Compound A and Compound B may be added in the form of a mixture thereof. The method of adding Compound A and Compound B is not particularly limited, and in a case where Compound A and Compound B are in the form of a solution, the fiber raw material may be immersed in the solution for liquid absorption, and may be then removed therefrom, or the solution may also be added dropwise onto the fiber raw material. Otherwise, Compound A and Compound B in necessary amounts may be added to the fiber raw material, or Compound A and Compound B in excessive amounts may be added to the fiber raw material and then, may be squeezed or filtrated to remove redundant Compound A and Compound B.

Examples of Compound A used in the present embodiment may include phosphoric acid or a salt thereof, dehydrated condensed phosphoric acid or a salt thereof, and phosphoric anhydride (diphosphorus pentoxide), but are not particularly limited thereto. As such phosphoric acid, those having various purities can be used, and for example, 100% phosphoric acid (orthophosphoric acid) or 85% phosphoric acid can be used. Dehydrated condensed phosphoric acid is phosphoric acid that is condensed by two or more molecules according to a dehydration reaction, and examples of such dehydrated condensed phosphoric acid may include pyrophosphoric acid and polyphosphoric acid. Examples of the phosphate and salts of dehydrated condensed phosphoric acid may include lithium salts, sodium salts, potassium salts, and ammonium salts of phosphoric acid or dehydrated condensed phosphoric acid, and these salts may have various neutralization degrees. Among these, from the viewpoints of high efficiency in introduction of the phosphoric acid groups, an improving tendency of the defibration efficiency in a defibration step described below, low costs, and industrial applicability, phosphoric acid, sodium salts of phosphoric acid, potassium salts of phosphoric acid, or ammonium salts of phosphoric acid are preferable, and phosphoric acid, sodium dihydrogen phosphate, disodium hydrogen phosphate, or ammonium dihydrogen phosphate is more preferable.

The amount of Compound A added to the fiber raw material is not particularly limited, and for example, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and further preferably 2% by mass or more and 30% by mass or less. By setting the amount of phosphorus atoms added to the fiber raw material within the above-described range, the yield of the ultrafine cellulose fibers can be further improved. On the other hand, by setting the amount of phosphorus atoms added to the fiber raw material to the above-described upper limit value or less, the balance between the effect of improving the yield and costs can be kept.

Compound B used in the present embodiment is at least one type selected from urea and a derivative thereof, as described above. Examples of Compound B may include urea, biuret, 1-phenyl urea, 1-benzyl urea, 1-methyl urea, and 1-ethyl urea. From the viewpoint of the improvement of the uniformity of the reaction, Compound B is preferably used in the form of an aqueous solution. Moreover, from the viewpoint of the further improvement of the uniformity of the reaction, an aqueous solution, in which both Compound A and Compound B are dissolved, is preferably used.

The amount of Compound B added to the fiber raw material (absolute dry mass) is not particularly limited, and for example, it is preferably 1% by mass or more and 500% by mass or less, more preferably 10% by mass or more and 400% by mass or less, and further preferably 100% by mass or more and 350% by mass or less.

In the reaction of the fiber raw material comprising cellulose with Compound A, for example, amides or amines, as well as Compound B, may be comprised in the reaction system. Examples of the amides may include formamide, dimethylformamide, acetamide, and dimethylacetamide. Examples of the amines may include methylamine, ethylamine, trimethylamine, triethylamine, monoethanolamine, diethanolamine, triethanolamine, pyridine, ethylenediamine, and hexamethylenediamine. Among these, particularly, triethylamine is known to work as a favorable reaction catalyst.

In the phosphoric acid group introduction step, after Compound A, etc. is added or mixed into the fiber raw material, a heat treatment is preferable performed on the fiber raw material. For the temperature of such a heat treatment, it is preferable to select a temperature that allows an efficient introduction of phosphoric acid groups, while suppressing the thermal decomposition or hydrolysis reaction of fibers. For example, the heat treatment temperature is preferably 50°C or higher and 300°C or lower, more preferably 100°C or higher and 250°C or lower, and further preferably 130°C or higher and 200°C or lower. In addition, apparatuses having various heating media can be utilized in the heat treatment, and examples of such an apparatus may include a stirring dryer, a rotary dryer, a disk dryer, a roll-type heater, a plate-type heater, a fluidized bed dryer, an airborne dryer, a vacuum dryer, an infrared heating device, a far-infrared heating device, and a microwave heating device.

In the heat treatment according to the present embodiment, a method comprising adding Compound A to a thin sheet-like fiber raw material by impregnation or the like, and then heating the fiber raw material, or a method comprising heating a fiber raw material, while kneading or stirring the fiber raw material and Compound A using a kneader or the like, can be adopted. Thereby, the unevenness in the concentration of the Compound A in the fiber raw material can be suppressed, and phosphoric acid groups can be more uniformly introduced into the surface of cellulose fibers comprised in the fiber raw material. This is considered because, when water molecules move to the surface of the fiber raw material as drying advances, Compound A dissolved therein is attracted to the water molecules due to surface tension and as a result, Compound A also moves to the surface of the fiber raw material (specifically, the unevenness in the concentration of the Compound A occurs), and because such a phenomenon can be suppressed by adopting the aforementioned method.

As a heating device used for the heat treatment, for example, a device capable of always discharging moisture retained by slurry or moisture generated by the dehydration condensation (phosphoric acid esterification) reaction of Compound A with hydroxyl groups, etc. comprised in cellulose or the like in the fiber raw material, to the outside of the device system, is preferable. Such a heating device may be, for example, a ventilation-type oven. By always discharging moisture from the device system, in addition to being able to suppress a hydrolysis reaction of phosphoric acid ester bonds, which is a reverse reaction of the phosphoric acid esterification, the acid hydrolysis of sugar chains in the fibers may also be suppressed. Thus, it becomes possible to obtain ultrafine cellulose fibers with a high axial ratio.

The time for the heat treatment is preferably 1 second or more and 300 minutes or less, more preferably 1 second or more and 1000 seconds or less, and further preferably 10 seconds or more and 800 seconds or less, for example, after moisture has been substantially removed from the fiber raw material. In the present embodiment, by setting the heating temperature and the heating time within an appropriate range, the amount of phosphoric acid groups introduced can be set within a preferred range.

The phosphoric acid group introduction step may be performed at least once, but may also be repeated two or more times. By performing the phosphoric acid group introduction step two or more times, many phosphoric acid groups can be introduced into the fiber raw material. In the present embodiment, as one example of a preferred aspect, the phosphoric acid group introduction step is performed two times.

The amount of phosphoric acid groups introduced into the fiber raw material may be, for example, 0.50 mmol/g or more, per 1 g (mass) of the ultrafine cellulose fibers, and it is preferably 0.70 mmol/g or more, and more preferably 1.00 mmol/g or more. On the other hand, the amount of phosphoric acid groups introduced into the fiber raw material is, for example, per 1 g (mass) of the ultrafine cellulose fibers, preferably 5.20 mmol/g or less, more preferably 3.65 mmol/g or less, and further preferably 3.00 mmol/g or less. By setting the amount of phosphoric acid groups introduced within the above-described range, it may become easy to perform fibrillation on the fiber raw material, and the stability of the ultrafine cellulose fibers can be enhanced. In addition, by setting the amount of phosphoric acid groups introduced within the above-described range, separation between the ultrafine cellulose fibers and the resin in the resin composition can be more effectively suppressed.

### < Carboxyl group introduction step >

When the ultrafine cellulose fibers have carboxyl groups, the step of producing the ultrafine cellulose fibers includes a carboxyl group introduction step. The carboxyl group introduction step is carried out by performing ozonation, oxidation according to the Fenton method, or an oxidation treatment such as a TEMPO oxidation treatment, or by treating such a fiber raw material comprising cellulose with a compound having a carboxylic acid-derived group or a derivative thereof, or with an acid anhydride of the compound having a carboxylic acid-derived group or a derivative thereof.

Examples of the compound having a carboxylic acid-derived group may include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid. In addition, examples of the derivative of the compound having a carboxylic acid-derived group may include, but are not particularly limited to, an imidized product of the acid anhydride of the compound having a carboxyl group and a derivative of the acid anhydride of the compound having a carboxyl group. Examples of the imidized product of the acid anhydride of the compound having a carboxyl group may include, but are not particularly limited to, imidized products of dicarboxylic acid compounds, such as maleimide, succinimide or phthalimide.

Examples of the acid anhydride of the compound having a carboxylic acid-derived group may include, but are not particularly limited to, acid anhydrides of dicarboxylic acid compounds, such as maleic anhydride, succinic anhydride, phthalic anhydride, glutaric anhydride, adipic anhydride, or itaconic anhydride. In addition, examples of the derivative of the acid anhydride of the compound having a carboxylic acid-derived group may include, but are not particularly limited to, acid anhydrides of the compounds having a carboxyl group, in which at least some hydrogen atoms are substituted with substituents such as alkyl groups or phenyl groups, such as dimethylmaleic anhydride, diethylmaleic anhydride, or diphenylmaleic anhydride.

In the case of performing a TEMPO oxidation treatment in the carboxyl group introduction step, the treatment is preferably carried out, for example, under conditions of pH 6 or more and pH 8 or less. Such a treatment is also referred to as a neutral TEMPO oxidation treatment. The neutral TEMPO oxidation treatment can be carried out, for example, by adding pulp used as a fiber raw material, nitroxy radical used as a catalyst, such as TEMPO (2,2,6,6-tetramethylpiperidin-1-oxyl), and sodium hypochlorite used as a sacrifice reagent to a sodium phosphate buffer (pH = 6.8). Moreover, by allowing sodium chlorite to coexist in the reaction system, aldehyde generated in the oxidation process can be efficiently oxidized to a carboxyl group.

Moreover, the TEMPO oxidation treatment may be carried out under conditions of pH 10 or more and pH 11 or less. Such a treatment is also referred to as an "alkaline TEMPO oxidation treatment." The alkaline TEMPO oxidation treatment can be carried out, for example, by adding nitroxy radicals such as TEMPO used as a catalyst, sodium bromide used as a co-catalyst, and sodium hypochlorite used as an oxidizer, to pulp as a fiber raw material.

The amount of carboxyl groups introduced into the fiber raw material is different depending on the types of the substituents. When carboxyl groups are introduced into the fiber raw material, for example, according to TEMPO oxidation, the amount of the carboxyl groups introduced may be 0.50 mmol/g or more, per 1 g (mass) of the ultrafine cellulose fibers, and it is preferably 0.70 mmol/g or more, and more preferably 1.00 mmol/g or more. On the other hand, the amount of the carboxyl groups introduced is, per 1 g (mass) of the ultrafine cellulose fibers, preferably 2.50 mmol/g or less, more preferably 2.20 mmol/g or less, and further preferably 2.00 mmol/g or less. Otherwise, when the substituents are carboxymethyl groups, the amount of the carboxyl groups introduced may be, per 1 g (mass) of the ultrafine cellulose fibers, 5.8 mmol/g or less. By setting the amount of the carboxyl groups introduced within the above-described range, separation between the ultrafine cellulose fibers and the resin in the resin composition can be more effectively suppressed.

### < Washing step >

In the method for producing ultrafine cellulose fibers according to the present embodiment, a washing step may be performed on the phosphoric acid group-introduced fibers, as necessary. The washing step is carried out by washing the phosphoric acid group-introduced fibers, for example, with water or an organic solvent. In addition, the washing step may be performed after each step as described below, and the number of washing operations performed in each washing step is not particularly limited.

### < Alkali treatment step >

When the ultrafine cellulose fibers are produced, an alkali treatment may be performed on the fiber raw material between the phosphoric acid group introduction step and a defibration treatment step as described below. The method of the alkali treatment is not particularly limited. For example, a method of immersing the phosphoric acid group-introduced fibers in an alkaline solution may be applied.

The alkali compound contained in the alkaline solution is not particularly limited, and it may be an inorganic alkaline compound or an organic alkali compound. In the present embodiment, because of high versatility, for example, sodium hydroxide or potassium hydroxide is preferably used as an alkaline compound. In addition, the solvent contained in the alkaline solution may be either water or an organic solvent. Among others, the solvent contained in the alkaline solution is preferably water, or a polar solvent including a polar organic solvent such as alcohol, and is more preferably an aqueous solvent containing at least water. As an alkaline solution, for example, a sodium hydroxide aqueous solution or a potassium hydroxide aqueous solution is preferable, because of high versatility.

The temperature of the alkali solution in the alkali treatment step is not particularly limited, and for example, it is preferably 5°C or higher and 80°C or lower, and more preferably 10°C or higher and 60°C or lower. The time for immersion of the phosphoric acid group-introduced fibers in the alkali solution in the alkali treatment step is not particularly limited, and for example, it is preferably 5 minutes or more and 30 minutes or less, and more preferably 10 minutes or more and 20 minutes or less. The amount of the alkali solution used in the alkali treatment is not particularly limited, and for example, it is preferably 100% by mass or more and 100000% by mass or less, and more preferably 1000% by mass and 10000% by mass or less, with respect to the absolute dry mass of the phosphoric acid group-introduced fibers.

In order to reduce the amount of the alkaline solution used in the alkali treatment step, the phosphoric acid group-introduced fibers may be washed with water or an organic solvent after the phosphoric acid group introduction step and before the alkali treatment step. After the alkali treatment step and before the defibration step, the alkali-treated phosphoric acid group-introduced fibers are preferably washed with water or an organic solvent, from the viewpoint of the improvement of the handling ability.

### < Acid treatment step >

When ultrafine cellulose fibers are produced, an acid treatment may be performed on the fiber raw material between the step of introducing anionic groups into the fiber raw material and the after-mentioned defibration treatment step. For example, a phosphoric acid group introduction step, an acid treatment, an alkali treatment, and a defibration treatment may be performed in this order.

Such an acid treatment method is not particularly limited, and for example, a method of immersing the fiber raw material in an acid solution containing an acid may be applied. The concentration of the used acid solution is not particularly limited, and for example, it is preferably 10% by mass or less, and more preferably 5% by mass or less. In addition, the pH of the used acid solution is not particularly limited, and for example, it is preferably a pH value of 0 or more and 4 or less, and more preferably a pH value of 1 or more and 3 or less. Examples of the acid contained in the acid solution that can be used herein may include inorganic acid, sulfonic acid, and carboxylic acid. Examples of the inorganic acid may include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid may include methanesulfonic acid, ethanesulfonic acid, benzenesulfonic acid, p-toluenesulfonic acid, and trifluoromethanesulfonic acid. Examples of the carboxylic acid may include formic acid, acetic acid, citric acid, gluconic acid, lactic acid, oxalic acid, and tartaric acid. Among these acids, it is particularly preferable to use hydrochloric acid or sulfuric acid.

The temperature of the acid solution used in the acid treatment is not particularly limited, and for example, it is preferably 5°C or higher and 100°C or lower, and more preferably 20°C or higher and 90°C or lower. The time for immersion of the fiber raw material in the acid solution in the acid treatment is not particularly limited, and for example, it is preferably 5 minutes or more and 120 minutes or less, and more preferably 10 minutes or more and 60 minutes or less. The amount of the acid solution used in the acid treatment is not particularly limited, and for example, it is preferably 100% by mass or more and 100000% by mass or less, and more preferably 1000% by mass or more and 10000% by mass or less, with respect to the absolute dry mass of the fiber raw material.

### < Defibration treatment >

By performing a defibration treatment on the anionic group-introduced fibers in a defibration treatment step, ultrafine cellulose fibers are obtained. In the defibration treatment step, for example, a defibration treatment apparatus can be used. Such a defibration treatment apparatus is not particularly limited, and for example, a high-speed defibrator, a grinder (stone mill-type crusher), a high-pressure homogenizer, an ultrahigh-pressure homogenizer, a high-pressure collision-type crusher, a ball mill, a bead mill, a disc-type refiner, a conical refiner, a twin-screw kneader, an oscillation mill, a homomixer under high-speed rotation, an ultrasonic disperser, a beater or the like can be used. Among the above-described defibration treatment apparatuses, it is more preferable to use a high-speed defibrator, a high-pressure homogenizer, and an ultrahigh-pressure homogenizer, which are less affected by milling media, and are less likely to be contaminated.

In the defibration treatment step, for example, the phosphoric acid group-introduced fibers are preferably diluted with a dispersion medium to form a slurry. As a dispersion medium, water, and one type or two or more types selected from organic solvents such as polar organic solvents can be used. The polar organic solvent is not particularly limited, and for example, alcohols, polyhydric alcohols, ketones, ethers, esters, aprotic polar solvents, etc. are preferable. Examples of the alcohols may include methanol, ethanol, isopropanol, n-butanol, and isobutyl alcohol. Examples of the polyhydric alcohols may include ethylene glycol, propylene glycol, and glycerin. Examples of the ketones may include acetone and methyl ethyl ketone (MEK). Examples of the ethers may include diethyl ether, tetrahydrofuran, ethylene glycol monomethyl ether, ethylene glycol monoethyl ether, ethylene glycol mono n-butyl ether, and propylene glycol monomethyl ether. Examples of the esters may include ethyl acetate and butyl acetate. Examples of the aprotic polar solvents may include dimethyl sulfoxide (DMSO), dimethylformamide (DMF), dimethylacetamide (DMAc), and N-methyl-2-pyrrolidinone (NMP).

The solid concentration of the ultrafine cellulose fibers upon the defibration treatment can be determined, as appropriate. In addition, in a slurry obtained by dispersing the phosphoric acid group-introduced fibers in a dispersion medium, solids other than the phosphoric acid group-introduced fibers, such as hydrogen-binding urea, may be comprised.

### (Organic onium ions)

The resin composition of the present invention comprises organic onium ions. Such organic onium ions may be present as counterions of the ultrafine cellulose fibers, or may also be present as free organic onium ions.

The organic onium ions preferably satisfy at least one condition selected from the following (a) and (b):
(a) containing a hydrocarbon group having 4 or more carbon atoms, and
(b) having a total carbon number of 16 or more.

Specifically, the ultrafine cellulose fibers preferably comprise, as counterions of anionic groups, at least one selected from organic onium ions containing hydrocarbon groups having 4 or more carbon atoms and organic onium ions having a total carbon number of 16 or more. By selecting organic onium ions satisfying at least one condition selected from the above-described (a) and (b), the compatibility of the ultrafine cellulose fibers with the resin can be enhanced.

The hydrocarbon group having 4 or more carbon atoms is preferably an alkyl group having 4 or more carbon atoms or an alkylene group having 4 or more carbon atoms, more preferably an alkyl group having 5 or more carbon atoms or an alkylene group having 5 or more carbon atoms, further preferably an alkyl group having 7 or more carbon atoms or an alkylene group having 7 or more carbon atoms, and particularly preferably an alkyl group having 10 or more carbon atoms or an alkylene group having 10 or more carbon atoms. Among others, the organic onium ions preferably comprise an alkyl group having 4 or more carbon atoms alkyl group, and more preferably comprise an alkyl group having 4 or more carbon atoms and also having a total carbon number of 16 or more.

The organic onium ion is preferably represented by the following formula (A):

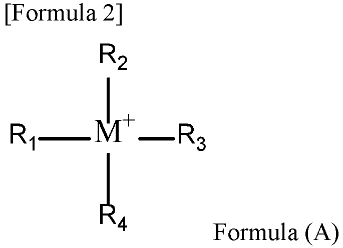

In the above formula (A), M represents a nitrogen atom or a phosphorus atom, and R₁ to R₄ each independently represent a hydrogen atom or an organic group. However, at least one of R₁ to R₄ represents an organic group containing 4 or more carbon atoms, or the total number of carbon atoms contained in R₁ to R₄ is 16 or more.

Among others, M is preferably a nitrogen atom. Specifically, the organic onium ion is preferably an organic ammonium ion. Moreover, preferably, at least one of R₁ to R₄ is an alkyl group containing 4 or more carbon atoms, and the total number of carbon atoms contained in R₁ to R₄ is 16 or more.

Examples of such an organic onium ion may include tetrabutyl ammonium, lauryltrimethyl ammonium, cetyltrimethyl ammonium, stearyltrimethyl ammonium, octyldimethylethyl ammonium, lauryldimethylethyl ammonium, didecyldimethyl ammonium, lauryldimethylbenzyl ammonium, tributylbenzyl ammonium, methyltri-n-ocyl ammonium, hexyl ammonium, n-octyl ammonium, dodecyl ammonium, tetradecyl ammonium, hexadecyl ammonium, stearyl ammonium, N,N-dimethyldodecyl ammonium, N,N-dimethyltetradecyl ammonium, N,N-dimethylhexadecyl ammonium, N,N-dimethyl-n-octadecyl ammonium, dihexyl ammonium, di(2-ethylhexyl) ammonium, di-n-octyl ammonium, didecyl ammonium, didodecyl ammonium, didecylmethyl ammonium, N,N-didodecylmethyl ammonium, polyoxyethylene dodecyl ammonium, alkyldimethylbenzyl ammonium, di-n-alkyldimethyl ammonium, behenyltrimethyl ammonium, tetraphenyl phosphonium, tetraoctyl phosphonium, acetonyltriphenyl phosphonium, allyltriphenyl phosphonium, amyltriphenyl phosphonium, benzyltriphenyl phosphonium, ethyltriphenyl phosphonium, diphenylpropyl phosphonium, triphenyl phosphonium, tricyclohexyl phosphonium, and tri-n-octyl phosphonium. Besides, the alkyl group in alkyldimethylbenzyl ammonium or di-n-alkyldimethyl ammonium may be, for example, a straight chain alkyl group having 8 or more and 18 or less carbon atoms.

Besides, as shown in the formula (A), the center element of the organic onium ion binds to a total of 4 groups or hydrogen atoms. When the aforementioned organic onium ion, the center element of which binds to less than 4 groups, hydrogen atom(s) bind to the rest(s), so as to form an organic onium ion(s). For example, in the case of N,N-didodecylmethyl ammonium, it can be determined from the name thereof that two dodecyl groups and one methyl group bind thereto. In this case, a hydrogen atom binds to the remaining one to form an organic onium ion.

The molecular weight of the organic onium ion is preferably 2000 or less, and more preferably 1800 or less. By setting the molecular weight of the organic onium ion within the above-described range, the handling ability of the ultrafine cellulose fibers can be enhanced. In addition, as a whole, a decrease in the content rate of cellulose can be suppressed.

The content of the organic onium ions is preferably 1.0% by mass or more, more preferably 1.5% by mass or more, and further preferably 2.0% by mass or more, with respect to the total mass of the resin composition. On the other hand, the content of the organic onium ions is preferably 30% by mass or less, and more preferably 20% by mass or less, with respect to the total mass of the resin composition.

In addition, the content of the organic onium ions in the ultrafine cellulose fibers is preferably an amount that is equimolar to or is 2 times the molar amount of anionic groups contained in the ultrafine cellulose fibers, but is not particularly limited thereto. Besides, the content of the organic onium ions can be measured by tracking atoms typically contained in the organic onium ions. Specifically, when the organic onium ions are ammonium ions, the amount of nitrogen atoms is measured, and when the organic onium ions are phosphonium ions, the amount of phosphorus atoms is measured. When the ultrafine cellulose fibers comprise nitrogen atoms or phosphorus atoms, as well as the organic onium ions, a method of extracting only the organic onium ions, for example, an extraction operation using an acid may be carried out, and thereafter, the amount of atoms of interest may be measured.

### (Resin)

The resin composition of the present invention comprises a resin. The type of such a resin is not particularly limited, and examples of the resin may include a thermoplastic resin and a thermosetting resin.

Among others, the resin is preferably at least one type selected from an acrylic resin, a polycarbonate resin, a polyester resin, a polyamide resin, a silicone resin, a fluorine resin, a chlorine resin, an epoxy resin, a melamine resin, a phenolic resin, a polyurethane resin, a diallyl phthalate resin, an alcoholic resin, a cellulose derivative and precursors of these resins; more preferably at least one type selected from an acrylic resin, a polycarbonate resin, a polyester resin, a polyamide resin, a silicone resin, a fluorine resin, a chlorine resin, an epoxy resin, a melamine resin, a polyurethane resin, a diallyl phthalate resin, and precursors of these resins; and further preferably at least one type selected from an acrylic resin and a polyurethane resin.

Besides, examples of the cellulose derivative may include carboxymethyl cellulose, methyl cellulose, and hydroxyethyl cellulose.

The resin composition of the present invention may comprise a resin precursor. The type of such a resin precursor is not particularly limited, and examples thereof may include a thermoplastic resin precursor and a thermosetting resin precursor. The thermoplastic resin precursor means a monomer or an oligomer having a relatively low molecular weight, which is used to produce a thermoplastic resin. The thermosetting resin precursor means a monomer or an oligomer having a relatively low molecular weight, which causes a polymerization reaction or a crosslinking reaction by the action of light, heat or a hardening agent, and as a result, may form a thermosetting resin.

The resin composition of the present invention may further comprise a water-soluble polymer as a resin that is different from the aforementioned resin type. Examples of the water-soluble polymer may include thickening polysaccharides, such as xanthan gum, guar gum, tamarind gum, carrageenan, locust bean gum, quince seed, alginic acid, pullulan, carrageenan, and pectin; starches, such as cationized starch, raw starch, oxidized starch, etherified starch, esterified starch, and amylose; glycerins, such as glycerin, diglycerin, and polyglycerin; and hyaluronic acid and a metal salt of hyaluronic acid.

The content of the resin is preferably 5% by mass or more, more preferably 10% by mass or more, and further preferably 15% by mass or more, with respect to the total mass of the resin composition. On the other hand, the content of the resin is preferably 90% by mass or less, and more preferably 80% by mass or less, with respect to the total mass of the resin composition.

### (Organic solvent)

The resin composition of the present invention comprises an organic solvent. Examples of such an organic solvent may include, but are not particularly limited to, methanol, ethanol, n-propyl alcohol, isopropyl alcohol (IPA), 1-butanol, m-cresol, glycerin, acetic acid, pyridine, tetrahydrofuran (THF), acetone, methyl ethyl ketone (MEK), ethyl acetate, aniline, N-methyl-2-pyrrolidone (NMP), dimethyl sulfoxide (DMSO), N,N-dimethylformamide (DMF), hexane, cyclohexane, benzene, toluene, p-xylene, diethyl ether, and chloroform. Among these, N-methyl-2-pyrrolidone (NMP), dimethyl sulfoxide (DMSO), methyl ethyl ketone (MEK), and toluene are preferably used.

The δp of the Hansen solubility parameter (HSP) of the organic solvent is preferably 5 MPa^{1/2} or more and 20 MPa^{1/2} or less, more preferably 10 MPa^{1/2} or more and 19 MPa^{1/2} or less, and further preferably 12 MPa^{1/2} or more and 18 MPa^{1/2} or less. In addition, the δh is preferably 5 MPa^{1/2} or more and 40 MPa^{1/2} or less, more preferably 5 MPa^{1/2} or more and 30 MPa^{1/2} or less, and further preferably 5 MPa^{1/2} or more and 20 MPa^{1/2} or less. The organic solvent, which simultaneously satisfies the δp that is in the range of 0 MPa^{1/2} or more and 4 MPa^{1/2} or less and the δh that is the range of 0 MPa^{1/2} or more and 6 MPa^{1/2} or less, is also preferable.

The content of the organic solvent is preferably 50% by mass or more, and more preferably 60% by mass or more, with respect to the total mass of the resin composition. On the other hand, the content of the organic solvent is preferably 99% by mass or less, with respect to the total mass of the resin composition.

### (Optional component)

In addition to the aforementioned ultrafine cellulose fibers, organic onium ions, resin, and organic solvent, the resin composition of the present invention may also comprise optional components.

Examples of such an optional component may include surfactants, organic ions, coupling agents, inorganic layered compounds, inorganic compounds, leveling agents, antiseptics, antifoaming agents, organic particles, lubricants, antistatic agents, ultraviolet protectors, dyes, pigments, stabilizers, magnetic powders, orientation promoters, plasticizers, dispersing agents, and crosslinkers. The resin composition of the present invention may comprise one type or two or more types of the above-described components.

The content of the above-described component(s) in the resin composition is preferably 40% by mass or less, more preferably 30% by mass or less, and further preferably 20% by mass or less, with respect to the total solid mass in the resin composition.

### (Step of producing resin composition)

The step of producing a resin composition includes a step of mixing ultrafine cellulose fibers with organic onium (hereinafter also referred to as a "step (a)") and a step of mixing the cellulose fiber mixture obtained in the mixing step, an organic solvent and a resin to obtain a resin composition (hereinafter also referred to as a "step (b)"). Herein, the organic onium may be either the aforementioned organic onium ions, or a compound that generates the aforementioned organic onium ions as a result of hydration or neutralization.

In the step (a), ultrafine cellulose fibers are mixed with organic onium. During this operation, solid-state ultrafine cellulose fibers (for example, an ultrafine cellulose fiber concentrate) may be mixed with the organic onium, or the organic onium may be added and mixed into a dispersed solution (slurry) of the ultrafine cellulose fibers obtained in the aforementioned < defibration treatment >.

When the organic onium is added into a dispersed solution of the ultrafine cellulose fibers, the organic onium is preferably added in the form of a solution containing organic onium ions, and is more preferably added in the form of an aqueous solution containing organic onium ions. The aqueous solution containing organic onium ions generally contains organic onium ions and counterions (anions). Upon preparation of the aqueous solution containing organic onium ions, if the organic onium ions and the corresponding counterions have already formed salts, they may be directly dissolved in water. In addition, there may also be a case where some organic onium ions are generated only after neutralization with acid, as in the case of dodecylamine. That is to say, organic onium ions may also be obtained by a reaction of a compound forming the organic onium ions as a result of neutralization, with acid. In this case, examples of the acid used in neutralization may include: inorganic acids such as hydrochloric acid, sulfuric acid and nitric acid; and organic acids such as lactic acid, formic acid and oxalic acid. In the step (a), it may be adequate if a compound forming organic onium as a result of neutralization is directly added into an ultrafine cellulose fiber-dispersed solution, so that the compound may be converted to organic onium ions, using anionic groups comprised in the ultrafine cellulose fibers as counterions.

The additive amount of the organic onium is preferably 2% by mass or more, more preferably 10% by mass or more, further preferably 20% by mass or more, and particularly preferably 50% by mass or more, with respect to the total mass of the ultrafine cellulose fibers. On the other hand, the additive amount of the organic onium is preferably 1000% by mass or less with respect to the total mass of the ultrafine cellulose fibers.

Moreover, the number of moles of the organic onium ions to be added is preferably 0.2 times or more, more preferably 1.0 time or more, and further preferably 2.0 times or more the value obtained by multiplying the amount of anionic groups comprised in the ultrafine cellulose fibers (the number of moles) by the valence. On the other hand, the number of moles of the organic onium ions to be added is preferably 10 times or less the value obtained by multiplying the amount of anionic groups comprised in the ultrafine cellulose fibers (the number of moles) by the valence.

When the organic onium is added to an ultrafine cellulose fiber-dispersed solution, followed by stirring, an aggregate is generated in the ultrafine cellulose fiber-dispersed solution. This aggregate is generated as a result of aggregation of the ultrafine cellulose fibers having organic onium ions as counterions of the anionic groups. The obtained ultrafine cellulose fiber aggregate may be washed with ion exchange water. By repeatedly washing the ultrafine cellulose fiber aggregate with ion exchange water, redundant organic onium ions and the like comprised in the ultrafine cellulose fiber aggregate can be removed. Thereafter, by separating the ultrafine cellulose fiber aggregate in a filtration step or the like, the ultrafine cellulose fiber aggregate can be recovered. It is to be noted that, in the present description, such an aggregate is also referred to as a "cellulose fiber mixture obtained in the step (a)").

The solid concentration of the thus obtained ultrafine cellulose fiber aggregate is preferably 10% by mass or more, more preferably 30% by mass or more, and further preferably 50% by mass or more.

In addition, the content of the organic onium ions in the aggregate is preferably 5% by mass or more, and more preferably 10% by mass or more. On the other hand, the content of the organic onium ions is preferably 90% by mass or less.

Moreover, in one embodiment of the present invention, a step of adding a coagulant containing a polyvalent metal salt to the ultrafine cellulose fiber-dispersed solution may be established before the step (a). In this case, examples of the polyvalent metal salt may include aluminum sulfate (alum), polyaluminum chloride, calcium chloride, aluminum chloride, magnesium chloride, calcium sulfate, and magnesium sulfate. Among others, aluminum sulfate is preferably used as a coagulant. A coagulant containing a polyvalent metal salt is added, followed by stirring, so that an ultrafine cellulose fiber aggregate containing a coagulant can be obtained.

The additive amount E of the coagulant containing a polyvalent metal salt is preferably within the range determined by (Formula 1), is more preferably within the range determined by (Formula 1A), and is further preferably within the range determined by (Formula IB), but is not particularly limited thereto. $0.1 \times A \times B \times C / D \leq E \leq 10 \times A \times B \times C / D$ (Formula 1) $0.2 \times A \times B \times C / D \leq E \leq 5 \times A \times B \times C / D$ (Formula 1A) $0.5 \times A \times B \times C / D \leq E \leq 2 \times A \times B \times C / D$ (Formula 1B) In the above formulae,
A: amount [mmol/g] of anionic groups possessed by cellulose fibers,
B: valence of functional groups,
C: amount [g] of cellulose fibers used,
D: valence of polyvalent metal ions, and
E: additive amount [mmol] of a coagulant containing a polyvalent metal salt.

Herein, the content of the polyvalent metal ions in the aggregate is preferably 0.1 g or more, and more preferably 1 g or more, per 100 g of a solid content. The content of the polyvalent metal ions is preferably 50 g or less.

The obtained ultrafine cellulose fiber aggregate may be washed with ion exchange water. By repeatedly washing the ultrafine cellulose fiber aggregate with ion exchange water, redundant coagulants and the like comprised in the ultrafine cellulose fiber aggregate can be removed. In addition, the ultrafine cellulose fiber aggregate may be concentrated by being further subjected to a drying step and the like.

When the step of adding a coagulant containing a polyvalent metal salt to the ultrafine cellulose fiber-dispersed solution is established before the step (a), the organic onium is preferably added in a step of re-dispersing the ultrafine cellulose fiber aggregate in an organic solvent. That is to say, the step (a) may be a step of mixing the ultrafine cellulose fiber aggregate with the organic onium.

Examples of the organic solvent used to obtain a re-dispersed solution may include alcohols, polyhydric alcohols, ketones, ethers, dimethyl sulfoxide (DMSO), dimethylformamide (DMF), and dimethylacetamide (DMAc). Examples of the alcohols may include methanol, ethanol, n-propanol, isopropanol, n-butanol, and t-butyl alcohol. Examples of the polyhydric alcohols may include ethylene glycol and glycerin. Examples of the ketones may include acetone and methyl ethyl ketone. Examples of the ethers may include diethyl ether, tetrahydrofuran, ethylene glycol monomethyl ether, ethylene glycol monoethyl ether, ethylene glycol mono-n-butyl ether, and ethylene glycol mono-t-butyl ether. Besides, water may be comprised in the above-described solvent. The content of the water is preferably 60% by mass or less, with respect to the total mass of the solvent.

In the step (b), the cellulose fiber mixture obtained in the mixing step (the step (a)), an organic solvent and a resin are mixed to obtain a resin composition. When the step of adding a coagulant containing a polyvalent metal salt to the ultrafine cellulose fiber-dispersed solution is not established before the step (a), the cellulose fiber mixture obtained in the step (a) is an ultrafine cellulose fiber aggregate. When the step of adding a coagulant containing a polyvalent metal salt to the ultrafine cellulose fiber-dispersed solution is established before the step (a), the cellulose fiber mixture obtained in the step (a) can be a slurry comprising the ultrafine cellulose fibers and the organic onium.

In the step (b), when the cellulose fiber mixture, an organic solvent and a resin are mixed, the organic solvent may be added to the cellulose fiber mixture, and the resin may be then mixed with the obtained mixture. Otherwise, the resin and the organic solvent may be simultaneously added to the cellulose fiber mixture to obtain a resin composition. When the step of adding a coagulant containing a polyvalent metal salt to the ultrafine cellulose fiber-dispersed solution is not established before the step (a), the organic solvent is preferably added to the cellulose fiber mixture (ultrafine cellulose fiber aggregate) to prepare a re-dispersed solution, which is then mixed with the resin.

When the step of adding a coagulant containing a polyvalent metal salt to the ultrafine cellulose fiber-dispersed solution is established before the step (a), an organic solvent is further added to a re-dispersed solution containing the ultrafine cellulose fibers and the organic onium in the step (b). When the step of adding a coagulant containing a polyvalent metal salt to the ultrafine cellulose fiber-dispersed solution is established before the step (a), the organic solvent may also be added in the step (a). In this case, the organic solvent added in the step (b) is preferably the same type of organic solvent as the organic solvent used in the re-dispersed solution of the ultrafine cellulose fibers.

### (Method for producing film)

The present invention relates to a method for producing a film.

The method for producing a film of the present invention comprises: a step of mixing cellulose fibers having a fiber width of 1000 nm or less with organic onium; a step of mixing the cellulose fiber mixture obtained in the mixing step, an organic solvent and a resin to obtain a resin composition; and a step of applying the resin composition onto a base material. Herein, the cellulose fibers have anionic groups, the content of the anionic groups is 0.50 mmol/g or more, and the content of the cellulose fibers in the resin composition is 1% by mass or more.

In the step of producing a film, the step of mixing cellulose fibers having a fiber width of 1000 nm or less with organic onium corresponds to the step (a) in the aforementioned (Step of producing a resin composition), and the step of mixing the cellulose fiber mixture obtained in the mixing step, an organic solvent and a resin to obtain a resin composition corresponds to the step (b) in the aforementioned (Step of producing a resin composition).

The step of applying the resin composition onto a base material is a step of applying a resin composition comprising the cellulose fibers having a fiber width of 1000 nm or less, the organic onium ions, the resin, and the organic solvent onto a base material to form a film. The step of applying the resin composition onto a base material preferably further includes a step of drying the film.

The material of a base material used in the step of applying the resin composition onto the base material is not particularly limited. A base material having high wettability to the resin composition is preferable because the shrinkage of the film, etc. occurring upon drying can be suppressed. Among others, a glass plate, a resin film or plate, a metal film or plate, and a cylindrical or granular body are preferable, but are not particularly limited thereto. Examples of the base material that can be used herein may include: resin films or plates, such as an acrylic resin, polylactic acid, polyethylene, polypropylene, polyethylene terephthalate, vinyl chloride, polystyrene, polyvinylidene chloride, polytetrafluoroethylene, perfluoroalkoxyalkane, polycarbonate, or polymethylpentene; metal films or plates, such as those made of aluminum, zinc, copper, or iron; the aforementioned films or plates, which are obtained by further performing an oxidation treatment on the surfaces thereof; and stainless steel films or plates, brass films or plates, and glass plates.

In the step of applying the resin composition onto a base material, when the resin composition has low viscosity and spreads on the base material, a damming frame may be fixed and used on the base material in order to obtain a film having a predetermined thickness and basis weight. The material of the damming frame is not particularly limited, and for example, frames formed from resin plates or metal plates are preferable. Examples of the damming frame that can be used in the present embodiment may include frames formed from: resin plates such as acrylic plates, polyethylene terephthalate plates, vinyl chloride plates, polystyrene plates, and polyvinylidene chloride plates; metal plates such as aluminum plates, zinc plates, copper plates, and iron plates; plates obtained by the oxidation treatment of surfaces thereof; and stainless plates and brass plates.

Examples of a coater that can be used herein to apply the resin composition onto the base material may include roll coaters, gravure coaters, die coaters, curtain coaters, and air doctor coaters. Among these coaters, die coaters, curtain coaters, and spray coaters are preferable because they can provide a more uniform thickness to a film.

The temperature of the resin composition upon the application thereof to the base material and the ambient temperature are not particularly limited, and for example, these temperature are preferably 5°C or higher and 80°C or lower, more preferably 10°C or higher and 60°C or lower, further preferably 15°C or higher and 50°C or lower, and particularly preferably 20°C or higher and 40°C or lower.

In the step of applying the resin composition onto the base material, it is preferable to apply the resin composition onto the base material, so as to achieve a finished basis weight of the film that is preferably 10 g/m² or more and 200 g/m² or less, and is more preferably, 20 g/m² or more and 150 g/m² or less. By applying the resin composition so as to achieve a basis weight that is within the above-described range, a film having excellent adhesiveness to the base material can be obtained.

The step of drying a film is not particularly limited, and the drying is carried out according to a contactless drying method, a method of drying the film while locking the film and the base material, or a combination thereof. The contactless drying method is not particularly limited, and for example, a method for drying by heating with hot air, infrared radiation, far-infrared radiation, or near-infrared radiation (a drying method by heating) or a method for drying in vacuum (a vacuum drying method) can be applied. The drying method by heating may be combined with the vacuum drying method, but the drying method by heating is generally applied. The drying with infrared radiation, far-infrared radiation, or near-infrared radiation is not particularly limited, and it can be performed, for example, using an infrared apparatus, a far-infrared apparatus, or a near-infrared apparatus. The heating temperature applied in the drying method by heating is not particularly limited, and for example, it is preferably 20°C or higher and 150°C or lower, and more preferably 25°C or higher and 105°C or lower. If the heating temperature is set to be equal to or higher than the above-described lower limit value, the dispersion medium can be rapidly volatilized. On the other hand, if the heating temperature is set to be equal to or lower than the above-described upper limit value, reduction in costs required for the heating and suppression of the thermal discoloration of the cellulose fibers can be realized.

### (Film)

The present invention also relates to a film formed from the aforementioned resin composition. Specifically, the present invention relates to a film comprising cellulose fibers having a fiber width of 1000 nm or less, organic onium ions, and a resin. Herein, the cellulose fibers have anionic groups, and the content of the anionic groups is 0.50 mmol/g or more. In addition, the content of the cellulose fibers is 4% by mass or more, with respect to the total mass of the film.

The film of the present invention strongly adheres to the base material. Separation between ultrafine cellulose fibers and a resin is suppressed in a resin composition comprising the ultrafine cellulose fibers, organic onium ions, and the resin, and the ultrafine cellulose fibers are uniformly dispersed in the resin composition. Accordingly, the adhesiveness of the film formed from the resin composition to the base material can be enhanced. By forming a film from such a resin composition, the content of the ultrafine cellulose fibers can be enhanced to 4% by mass or more.

The film of the present invention preferably has high adhesiveness to a base material and does not have peelability from the base material. However, it is possible to peel the film from the base material by applying a specific separation method such as a physical separation means. In such a case, the film can also be separated as a monolayer sheet.

The content of the ultrafine cellulose fibers in the film may be 4% by mass or more, with respect to the total mass of the film, and it is more preferably 5% by mass or more, and further preferably 6% by mass or more. On the other hand, the content of the ultrafine cellulose fibers in the film is preferably 95% by mass or less. By setting the content of the ultrafine cellulose fibers within the above-described range, the adhesiveness between the film and the base material can be more effectively enhanced.

The content of the organic onium ions in the film is preferably 4% by mass or more, more preferably 6% by mass or more, even more preferably 8% by mass or more, further preferably 10% by mass or more, and particularly preferably 12% by mass or more, with respect to the total mass of the film. On the other hand, the content of the organic onium ions in the film is preferably 80% by mass or less, with respect to the total mass of the film. By setting the content of the organic onium ions within the above-described range, the adhesiveness between the film and the base material can be more effectively enhanced.

The content of the resin in the film is preferably 30% by mass or more, more preferably 40% by mass or more, and further preferably 50% by mass or more, with respect to the total mass of the film. On the other hand, the content of the resin in the film is preferably 95% by mass or less, with respect to the total mass of the film.

The content of the ultrafine cellulose fibers in the film is a value calculated by dividing the mass of the ultrafine cellulose fibers by the mass of the film. However, the mass of the ultrafine cellulose fibers is defined to be a mass when the counterions of the anionic groups possessed by the ultrafine cellulose fibers are hydrogen ions (H⁺). Herein, the mass of the ultrafine cellulose fibers is measured by the following method. First, the ultrafine cellulose fibers are extracted according to a suitable method. For example, when the ultrafine cellulose fibers are composited with the resin, the ultrafine cellulose fibers are extracted by treating the fibers with a solvent selectively dissolving only the resin. Thereafter, the components existing as counterions of the anionic groups possessed by the ultrafine cellulose fibers are selectively extracted in the form of salts by performing an acid treatment. A solid content remaining after completion of these operations is considered to be the mass of the ultrafine cellulose fibers.

Moreover, the content of the organic onium ions in the film is a value calculated by dividing the mass of the organic onium ions by the mass of the film. Herein, the mass of the organic onium ions can be measured by tracking atoms typically contained in the organic onium ions. Specifically, when the organic onium ions are ammonium ions, the amount of nitrogen atoms is measured. When the organic onium ions are phosphonium ions, the amount of phosphorus atoms is measured. Besides, when the ultrafine cellulose fibers comprise nitrogen atoms or phosphorus atoms, as well as the organic onium ions, a method of extracting only the organic onium ions, for example, an extraction operation using an acid may be performed, and the amount of the desired atoms may be then measured.

The thickness of the film is not particularly limited, and for example, it is preferably 5 µm or more, more preferably 10 µm or more, and further preferably 20 µm or more. The upper limit value of the thickness of the film is not particularly limited, and it can be set at, for example, 1000 µm. The thickness of the film can be measured, for example, using a stylus thickness gauge (manufactured by Mahr; Millitron 1202 D).

### (Laminate)

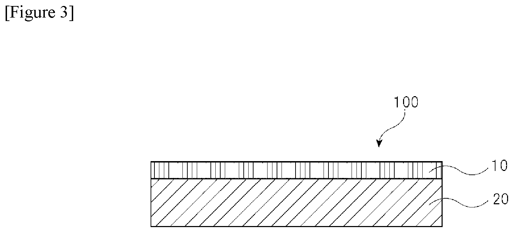

The present invention also relates to a laminate obtained by forming the aforementioned film on at least one surface of a base material. Figure 3 is a cross-sectional view illustrating the structure of a laminate 100. As shown in Figure 3, the laminate 100 has a film 10 laminated on a base material 20. Herein, another layer may be established between the base material 20 and the film 10, but the film 10 is preferably laminated on the base material 20 such that the film is directly contacted with the base material. Figure 3 illustrates the laminate 100 obtained by forming the film 10 on one surface of the base material 20, but the laminate of the present invention may also be a laminate obtained by forming the films on both surfaces of the base material.

Examples of the base material may include: resin films or plates, such as an acrylic resin, polylactic acid, polyethylene, polypropylene, polyethylene terephthalate, vinyl chloride, polystyrene, polyvinylidene chloride, polytetrafluoroethylene, perfluoroalkoxyalkane, polycarbonate, or polymethylpentene; metal films or plates, such as those made of aluminum, zinc, copper, or iron; the aforementioned films or plates, which are obtained by further performing an oxidation treatment on the surfaces thereof; and stainless steel films or plates, brass films or plates, and glass plates. Among these, the base material is preferably a glass layer or a stainless steel layer.

The thickness of the base material is not particularly limited, and it is preferably 5 µm or more, and more preferably 10 µm or more. On the other hand, the thickness of the base material is preferably 10000 µm or less, and more preferably 1000 µm or less.

The base material may be a film or plate having a curved surface or unevenness. In addition, the base material may be a cylindrical or granular body formed from the aforementioned material. In such a case, the laminate may be a cylindrical or granular body formed by coating the outer circumferential surface of the base material with the film.

### (Intended use)

The intended use of the resin composition of the present invention is not particularly limited. For example, the present resin composition may be used as a thickener, a reinforcing agent or an additive, in cements, paints, inks, lubricants, etc. Moreover, the laminate obtained by applying the resin composition onto the base material is also suitable for intended uses, such as reinforcing materials, interior materials, exterior materials, wrapping materials, electronic materials, optical materials, acoustic materials, processing materials, transport equipment components, electronic equipment components, and electrochemical element components.

### Examples

The characteristics of the present invention will be more specifically described in the following examples and comparative examples. The materials, used amounts, ratios, treatment contents, treatment procedures, etc. described in the following examples can be appropriately modified, unless they are deviated from the gist of the present invention. Accordingly, the scope of the present invention should not be restrictively interpreted by the following specific examples.

### < Production Example 1-1 >

### [Production of ultrafine cellulose fiber concentrate]

The needle bleached kraft pulp manufactured by Oji Paper Co., Ltd. (solid content: 93% by mass; basis weight: 208 g/m², sheet-shaped; and Canadian Standard Freeness (CSF) measured according to JIS P 8121 after defibration is 700 ml) was used as a raw material pulp. A phosphorylation treatment was performed on this raw material pulp as follows. First, a mixed aqueous solution of ammonium dihydrogen phosphate and urea was added to 100 parts by mass (absolute dry mass) of the above raw material pulp, and the obtained mixture was adjusted to result in 45 parts by mass of the ammonium dihydrogen phosphate, 120 parts by mass of the urea and 150 parts by mass of water, so as to obtain a chemical-impregnated pulp. Subsequently, the obtained chemical-impregnated pulp was heated in a hot-air dryer at 165°C for 200 seconds, so that phosphoric acid groups were introduced into cellulose in the pulp, thereby obtaining a phosphorylated pulp.

Subsequently, a washing treatment was performed on the obtained phosphorylated pulp. The washing treatment was carried out by repeating the operation to pour 10 L of ion exchange water onto 100 g (absolute dry mass) of the phosphorylated pulp to obtain a pulp dispersed solution, which was then uniformly dispersed by stirring, followed by filtration and dehydration. The washing was terminated at a time point at which the electric conductivity of the filtrate became 100 µS/cm or less.

The above-described phosphorylation treatment and the above-described washing treatment were further carried out on the washed phosphorylated pulp each once in this order.

Subsequently, a neutralization treatment was performed on the phosphorylated pulp after the washing as follows. First, the phosphorylated pulp after the washing was diluted with 10 L of ion exchange water, and then, while stirring, a 1 N sodium hydroxide aqueous solution was slowly added to the diluted solution to obtain a phosphorylated pulp slurry having a pH value of 12 or more and 13 or less. Thereafter, the phosphorylated pulp slurry was dehydrated, so as to obtain a neutralized phosphorylated pulp. Subsequently, the above-described washing treatment was performed on the phosphorylated pulp after the neutralization treatment.

The infrared absorption spectrum of the thus obtained phosphorylated pulp was measured by FT-IR. As a result, absorption based on the phosphoric acid groups was observed around 1230 cm⁻¹, and thus, addition of the phosphoric acid groups to the pulp was confirmed. Moreover, the obtained phosphorylated pulp was analyzed using an X-ray diffractometer. As a result, it was confirmed that there were typical peaks at two positions near 2θ = 14° or more and 17° or less, and near 2θ = 22° or more and 23° or less. Thus, the phosphorylated pulp was confirmed to have cellulose type I crystals.

Ion exchange water was added to the obtained phosphorylated pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution A comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, the fiber width was 3 to 5 nm. Besides, the amount of phosphoric acid groups (the amount of strong acid groups) measured by the after-mentioned measurement method was 2.00 mmol/g.

100 g of An aqueous solution containing 3.86% by mass of di-n-stearyldimethyl ammonium chloride was added to 100 g of the ultrafine cellulose fiber-dispersed solution A, and the obtained mixture was then stirred for 5 minutes. As a result, an aggregate was generated in the ultrafine cellulose fiber-dispersed solution. The ultrafine cellulose fiber-dispersed solution comprising such an aggregate was filtrated under reduced pressure to obtain an ultrafine cellulose fiber aggregate.

The obtained ultrafine cellulose fiber aggregate was repeatedly washed with ion exchange water to remove redundant di-n-stearyldimethyl ammonium chloride contained in the ultrafine cellulose fiber aggregate and eluted ions, so as to obtain an ultrafine cellulose fiber concentrate. The obtained ultrafine cellulose fiber concentrate was air-dried to obtain an ultrafine cellulose fiber concentrate A having a solid concentration of 90% by mass.

### < Production Example 1-2 >

An ultrafine cellulose fiber-dispersed solution A was obtained in the same manner as that of Production Example 1-1. 100 g of the ultrafine cellulose fiber-dispersed solution A was taken, and while stirring, 0.39 g of aluminum sulfate was added thereto. The obtained mixture was further stirred for 5 hours, and as a result, an aggregate of ultrafine cellulose fibers was observed. Subsequently, the ultrafine cellulose fiber-dispersed solution was filtrated under reduced pressure to obtain an ultrafine cellulose fiber aggregate. The obtained ultrafine cellulose fiber aggregate was re-suspended in ion exchange water, so that the content of the ultrafine cellulose fibers became 2.0% by mass. Thereafter, the operation of performing filtration and compression was repeated for washing, so as to obtain an ultrafine cellulose fiber concentrate. The washing was terminated at a time point at which the electric conductivity of the filtrate became 100 µS/cm or less.

Further, the obtained ultrafine cellulose fiber aggregate was re-suspended in methyl ethyl ketone, so that the content of the ultrafine cellulose fibers became 2.0% by mass. Subsequently, the operation of performing filtration and compression was repeated, so that the ion exchange water was replaced with methyl ethyl ketone. The solid concentration of the thus obtained ultrafine cellulose fiber concentrate B was 15% by mass. The amount of aluminum ions contained in the obtained ultrafine cellulose fiber concentrate B was measured by the after-mentioned method. As a result, the amount of aluminum ions was 2.9 g per 100 g of the solid.

### < Production Example 2-1 >

As a raw material pulp, the needle bleached kraft pulp manufactured by Oji Paper Co., Ltd. (solid content: 93% by mass; basis weight: 208 g/m², sheet-shaped; and Canadian Standard Freeness (CSF) measured according to JIS P 8121 after defibration is 700 ml) was used. A TEMPO oxidation treatment was performed on this raw material pulp as follows. First, the above-described raw material pulp corresponding to 100 parts by mass (dry mass), 1.6 parts by mass of TEMPO (2,2,6,6-tetramethylpiperidin-1-oxyl), and 10 parts by mass of sodium bromide were dispersed in 10000 parts by mass of water. Subsequently, an aqueous solution containing 13% by mass of sodium hypochlorite was added to the obtained solution, such that the amount of sodium hypochlorite became 10 mmol with respect to 1.0 g of the pulp, so as to start the reaction. During the reaction, the pH was kept at pH 10 or more and pH 10.5 or less by the dropwise addition of a 0.5 M sodium hydroxide aqueous solution. The time point at which change in the pH was no longer seen was considered to be termination of the reaction.

Subsequently, a washing treatment was performed on the obtained TEMPO-oxidized pulp. The washing treatment was carried out by repeating the operation of dehydrating the pulp slurry after the TEMPO oxidation to obtain a dehydrated sheet, then pouring 5000 parts by mass of ion exchange water onto the dehydrated sheet, which was then uniformly dispersed by stirring, and was then subjected to filtration and dehydration. The washing was terminated at a time point at which the electric conductivity of the filtrate became 100 µS/cm or less.

In addition, the obtained TEMPO-oxidized pulp was analyzed using an X-ray diffractometer. As a result, it was confirmed that there were typical peaks at two positions near 2θ = 14° or more and 17° or less, and near 2θ = 22° or more and 23° or less. Thus, the TEMPO-oxidized pulp was confirmed to have cellulose type I crystals.

Ion exchange water was added to the obtained TEMPO-oxidized pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution B comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope, and as a result, the fiber width was 3 to 5 nm. Besides, the amount of carboxyl groups measured by the after-mentioned method was 1.80 mmol/g.

An ultrafine cellulose fiber concentrate was obtained in the same manner as that of Production Example 1-1, with the exceptions that the ultrafine cellulose fiber-dispersed solution B was used instead of the ultrafine cellulose fiber-dispersed solution A, and that an aqueous solution (100 g) containing 2.11% by mass of di-n-stearyldimethyl ammonium chloride was added to 100 g of the ultrafine cellulose fiber-dispersed solution B. The obtained ultrafine cellulose fiber concentrate was air-dried to obtain an ultrafine cellulose fiber concentrate C having a solid concentration of 90% by mass.

### < Example 1 >

### [Preparation of resin composition]

Toluene was added to the ultrafine cellulose fiber concentrate A, so that the solid concentration became 15% by mass. Thereafter, using an ultrasonic homogenizer (manufactured by Hielscher, UP400S), an ultrasonic treatment was carried out for 10 minutes to obtain a re-dispersed solution of the ultrafine cellulose fibers.

Subsequently, the obtained ultrafine cellulose fiber-re-dispersed solution, an acrylic resin (manufactured by DIC Corporation, Acrydic A-181), and toluene were mixed with one another to obtain an ultrafine cellulose fiber-containing resin composition.

In the obtained resin composition, the content of the ultrafine cellulose fibers was 2.1% by mass, the content of the organic onium ions was 3.9% by mass, the content of the acrylic resin was 24.0% by mass, and the content of the toluene was 70.0% by mass. In addition, the water content in the obtained resin composition was calculated from the additive amount of the tested ultrafine cellulose fiber concentrate A. As a result, the water content in the resin composition was found to be 0.6% by mass.

### [Preparation of film]

An ultrafine cellulose fiber-containing resin composition was applied onto a glass plate, using an applicator, and it was then dried in a hot-air dryer at 100°C for 10 minutes to obtain a film. The finished basis weight of the film was measured, and as a result, it was found to be 100 g/m². In the obtained film, the content of the ultrafine cellulose fibers was 7.0% by mass, the content of the organic onium ions was 13.0% by mass, and the content of the acrylic resin was 80.0% by mass.

### < Example 2 >

### [Preparation of resin composition]

To the ultrafine cellulose fiber concentrate B, an aqueous solution containing 55% by mass of tetrabutyl ammonium hydroxide was added, and methyl ethyl ketone was then added thereto, so that the solid content became 10% by mass. Subsequently, using an ultrasonic homogenizer (manufactured by Hielscher, UP400S), an ultrasonic treatment was carried out for 10 minutes to obtain an ultrafine cellulose fiber-re-dispersed solution. Upon preparation of the re-dispersed solution, the tetrabutyl ammonium hydroxide aqueous solution was added to the ultrafine cellulose fiber concentrate, so that the additive amount D [mmol] of tetrabutyl ammonium hydroxide became the value obtained by the following equation (1). $D = \left(A+C\right) \times B$ (1)

In the above equation (1), A, B and C indicate the following:
A: the amount [mmol/g] of anions derived from functional groups introduced into ultrafine cellulose fibers,
B: the amount [g] of the tested ultrafine cellulose fibers, and
C: the amount [mmol/g] of aluminum ions contained in the ultrafine cellulose fiber concentrate.

Subsequently, the obtained ultrafine cellulose fiber-re-dispersed solution, a urethane resin (PU2565, manufactured by Arakawa Chemical Industries, Ltd.), and methyl ethyl ketone were mixed with one another to obtain an ultrafine cellulose fiber-containing resin composition.

In the obtained resin composition, the content of the ultrafine cellulose fibers was 2.5% by mass, the content of the organic onium ions was 2.7% by mass, the content of the urethane resin was 15% by mass, and the content of the methyl ethyl ketone was 77.6% by mass. In addition, the water content in the obtained resin composition was calculated from the additive amount of the tested ultrafine cellulose fiber concentrate B and the additive amount of the aqueous solution containing 55% by mass of tetrabutyl ammonium hydroxide. As a result, the water content in the resin composition was found to be 2.2% by mass.

### [Preparation of film]

A film was obtained in the same manner as that of Example 1. The finished basis weight of the film was measured, and as a result, it was found to be 100 g/m². In the obtained film, the content of the ultrafine cellulose fibers was 12.2% by mass, the content of the organic onium ions was 13.3% by mass, and the content of the urethane resin was 74.5% by mass.

### < Example 3 >

An ultrafine cellulose fiber-containing resin composition and a film were obtained in the same manner as that of Example 1, with the exception that toluene was added so that the solid concentration of the ultrafine cellulose fiber-containing resin composition became 20% by mass.

In the obtained resin composition, the content of the ultrafine cellulose fibers was 1.4% by mass, the content of the organic onium ions was 2.6% by mass, the content of the acrylic resin was 16.0% by mass, and the content of the toluene was 80.0% by mass. In addition, the water content in the obtained resin composition was calculated from the additive amount of the tested ultrafine cellulose fiber concentrate A. As a result, the water content in the resin composition was found to be 0.4% by mass.

In the obtained film, the content of the ultrafine cellulose fibers was 7.0% by mass, the content of the organic onium ions was 13.0% by mass, and the content of the acrylic resin was 80.0% by mass.

### < Example 4 >

An ultrafine cellulose fiber-containing resin composition and a film were obtained in the same manner as that of Example 1, with the exception that the ultrafine cellulose fiber concentrate C was used instead of the ultrafine cellulose fiber concentrate A.

In the obtained resin composition, the content of the ultrafine cellulose fibers was 3.0% by mass, the content of the organic onium ions was 3.0% by mass, the content of the acrylic resin was 24.0% by mass, and the content of the toluene was 80.0% by mass. In addition, the water content in the obtained resin composition was calculated from the additive amount of the tested ultrafine cellulose fiber concentrate C. As a result, the water content in the resin composition was found to be 0.6% by mass.

In the obtained film, the content of the ultrafine cellulose fibers was 10.1% by mass, the content of the organic onium ions was 9.9% by mass, and the content of the acrylic resin was 80.0% by mass.

### < Comparative Example 1 >

An ultrafine cellulose fiber-containing resin composition and a film were obtained in the same manner as that of Example 1, with the exception that toluene was added so that the solid concentration of the ultrafine cellulose fiber-containing resin composition became 5% by mass.

In the obtained resin composition, the content of the ultrafine cellulose fibers was 0.3% by mass, the content of the organic onium ions was 0.7% by mass, the content of the acrylic resin was 4.0% by mass, and the content of the toluene was 95.0% by mass. In addition, the water content in the obtained resin composition was calculated from the additive amount of the tested ultrafine cellulose fiber concentrate A. As a result, the water content in the resin composition was found to be 0.1% by mass.

In the obtained film, the content of the ultrafine cellulose fibers was 7.0% by mass, the content of the organic onium ions was 13.0% by mass, and the content of the acrylic resin was 80.0% by mass.

### < Comparative Example 2 >

An ultrafine cellulose fiber-re-dispersed solution was obtained in the same manner as that of Example 1.

Subsequently, the obtained ultrafine cellulose fiber-re-dispersed solution, an acrylic resin (manufactured by DIC Corporation, Acrydic A-181), and toluene were mixed with one another to obtain an ultrafine cellulose fiber-containing resin composition.

In the obtained resin composition, the content of the ultrafine cellulose fibers was 0.5% by mass, the content of the organic onium ions was 0.5% by mass, the content of the acrylic resin was 19.0% by mass, and the content of the toluene was 80.0% by mass. In addition, the water content in the obtained resin composition was calculated from the additive amount of the tested ultrafine cellulose fiber concentrate A. As a result, the water content in the resin composition was found to be 0.1% by mass.

In the obtained film, the content of the ultrafine cellulose fibers was 2.7% by mass, the content of the organic onium ions was 2.3% by mass, and the content of the acrylic resin was 95.0% by mass.

### < Evaluation method >

### [Measurement of amount of phosphoric acid groups]

The amount of phosphoric acid groups in the ultrafine cellulose fibers was measured by treating with an ion exchange resin, a cellulose fiber-containing slurry prepared by diluting an ultrafine cellulose fiber-dispersed solution comprising the ultrafine cellulose fibers as targets with ion exchange water to result in a content of 0.2% by mass, and then performing titration using alkali.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-µm apertures to separate the resin from the slurry.

In the titration using alkali, a change in the electric conductivity value indicated by the slurry was measured while adding an aqueous solution of 0.1 N sodium hydroxide, once 30 seconds, in each amount of 50 µL, to the cellulose fiber-containing slurry after completion of the treatment with the ion exchange resin. Specifically, among the calculation results, the alkali amount (mmol) required in a region corresponding to the first region shown in Figure 1 was divided by the solid content (g) in the slurry to be titrated, so as to obtain the amount of phosphoric acid groups (mmol/g).

### < Measurement of amount of carboxyl groups >

The amount of carboxyl groups in the ultrafine cellulose fibers was measured by treating with an ion exchange resin, a cellulose fiber-containing slurry prepared by diluting the ultrafine cellulose fiber-dispersed solution comprising ultrafine cellulose fibers as targets with ion exchange water to result in a content of 0.2% by mass, and then performing titration using alkali.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-µm apertures to separate the resin from the slurry.

In the titration using alkali, a change in the electric conductivity value indicated by the slurry was measured while adding an aqueous solution of 0.1 N sodium hydroxide, once 30 seconds, in each amount of 50 µL, to the cellulose fiber-containing slurry after completion of the treatment with the ion exchange resin. Specifically, among the calculation results, the alkali amount (mmol) required in a region corresponding to the first region shown in Figure 2 was divided by the solid content (g) in the slurry to be titrated, so as to obtain the amount of carboxyl groups (mmol/g).

### [Measurement of content of organic onium ions]

The content of the organic onium ions in the resin composition and in the film was determined by measuring the amount of nitrogen according to a trace nitrogen analysis method. In the trace nitrogen analysis, the amount of nitrogen was measured using the trace total nitrogen analysis device TN-110 manufactured by Mitsubishi Chemical Analytech Co., Ltd. Before the measurement, the solvent was removed from the obtained resin composition or film by drying the resin composition or the film at a low temperature (in a vacuum dryer, at 40°C for 24 hours).

The content (% by mass) of the organic onium ions per unit mass of the resin composition or the film was obtained by multiplying the nitrogen content (g/g) per unit mass obtained by the trace nitrogen analysis, by the molecular weight of the organic onium ions, and then dividing the obtained value by the atomic weight of nitrogen.

### [Measurement of aluminum content]

The amount of aluminum contained in the ultrafine cellulose fiber concentrate was measured in accordance with JIS G 1257-10-1: 2013.

### [Measurement of content of ultrafine cellulose fibers]

The content of the ultrafine cellulose fibers in the resin composition and in the film was measured by the following method.

First, the mass of the ultrafine cellulose fibers contained in the resin composition and in the film was measured. Specifically, components bound to the ultrafine cellulose fibers via a covalent bond were extracted. Thereafter, components existing as counterions of the anionic groups possessed by the ultrafine cellulose fibers were selectively extracted in the form of salts by an acid treatment. A solid content remaining after completion of this operation was defined to be the mass of the ultrafine cellulose fibers. Besides, the mass of the ultrafine cellulose fibers was defined to be a mass when the counterions of the anionic groups possessed by the ultrafine cellulose fibers were hydrogen ions (H⁺).

Subsequently, the mass of the ultrafine cellulose fibers was divided by the mass of the resin composition to calculate the content of the ultrafine cellulose fibers.

### [Measurement of surface tension]

The surface tension of the ultrafine cellulose fiber-containing resin composition obtained in each of the examples and the comparative examples was measured using SURFACE TENSIOMETER CBVP-A3 manufactured by Kyowa Interface Science, Inc. under conditions of a sample temperature of 23°C.

### [Separation state between ultrafine cellulose fibers and resin]

The film obtained in each of the examples and the comparative examples was evaluated by visual observation, in terms of the separation state between the ultrafine cellulose fibers and the resin (presence or absence of separation), in accordance with the following evaluation criteria:
○: the ultrafine cellulose fibers cannot be distinguished from the resin by naked eyes (not separated),
Δ: unevenness on the surface due to separation between the ultrafine cellulose fibers and the resin is found in the entire film, and
×: separation between the ultrafine cellulose fibers and the resin is found by naked eyes.

### [Adhesiveness]

The film obtained in each of the examples and the comparative examples was evaluated by visual observation, in terms of the adhesiveness thereof to the base material, in accordance with the following evaluation criteria:
○: the base material and the film adhere to each other to such an extent that the film cannot be removed from the base material by hand,
Δ: the obtained film was removed from the base material by hand, and
×: the film cannot be obtained.

### [Peelability]

The film obtained in each of the examples and the comparative examples was evaluated by visual observation, in terms of the peelability thereof from the base material, in accordance with the following evaluation criteria:
○: the obtained film can be peeled from the base material by hand,
Δ: the film is broken while it is peeled from the base material by hand, but only a part thereof can be peeled, and
×: the film cannot be peeled from the base material by hand.

**[Table 1]**

| | Substituents of ultrafine cellulose fibers | Organic onium | Resin | Organic solvent |
|---|---|---|---|---|
| Example 1 | Phosphoric acid group | Di-n-stearyl dimethyl ammonium | Acrylic resin | Toluene |
| Example 2 | Phosphoric acid group | Tetrabutyl ammonium | Urethane resin | MEK |
| Example 3 | Phosphoric acid group | Di-n-stearyl dimethyl ammonium | Acrylic resin | Toluene |
| Example 4 | Carboxyl group | Di-n-stearyl dimethyl ammonium | Acrylic resin | Toluene |
| Comparative Example 1 | Phosphoric acid group | Di-n-stearyl dimethyl ammonium | Acrylic resin | Toluene |
| Comparative Example 2 | Phosphoric acid group | Di-n-stearyl dimethyl ammonium | Acrylic resin | Toluene |

**[Table 2]**

| | Resin composition | | | | | | Coating film | | |
|---|---|---|---|---|---|---|---|---|---|
| | Content [% by mass] | | | | | G value | Separation between ultrafine cellulose fibers and resin | Adhesiveness | Peelability |
| | Ultrafine cellulose fibers | Organic onium ions | Resin | Organic solvent | Water | | | | |
| Example 1 | 2.1 | 3.9 | 24 | 70.0 | < 1 | 0.85 | ○ | ○ | × |
| Example 2 | 2.5 | 2.7 | 15 | 77.6 | 2.2 | 0.87 | ○ | ○ | × |
| Example 3 | 1.4 | 2.6 | 16 | 80.0 | < 1 | 0.88 | Δ | ○ | × |
| Example 4 | 3.0 | 3.0 | 24 | 70.0 | < 1 | 0.87 | ○ | ○ | × |
| Comparative Example 1 | 0.3 | 0.7 | 4 | 95.0 | < 1 | 0.92 | × | Δ | Δ |
| Comparative Example 2 | 0.5 | 0.5 | 19 | 80.0 | < 1 | 0.93 | × | Δ | Δ |

In the examples, a film, in which separation between ultrafine cellulose fibers and a resin could be suppressed and which has excellent adhesiveness to a base material, could be obtained. In contrast, in the comparative examples, separation between ultrafine cellulose fibers and a resin was observed, and the adhesiveness of a film to a base material was also poor.

### Reference Signs List

- 10: Film
- 20: Base material
- 100: Laminate

## Claims

1. A method for producing a cellulose fiber-containing film, comprising:
mixing cellulose fibers having a fiber width of 1000 nm or less with organic onium;
mixing the cellulose fiber mixture obtained in the mixing step, an organic solvent and a resin to obtain a resin composition; and
applying the resin composition onto a base material, wherein
the cellulose fibers have anionic groups, and the content of the anionic groups is 0.50 mmol/g or more, and
the content of the cellulose fibers in the resin composition is 1% by mass or more.

2. The method for producing a cellulose fiber-containing film according to claim 1, wherein the organic onium satisfies at least one condition selected from the following (a) and (b):
(a) containing a hydrocarbon group having 4 or more carbon atoms, and
(b) having a total carbon number of 16 or more.

3. A resin composition comprising cellulose fibers having a fiber width of 1000 nm or less, organic onium ions, a resin, and an organic solvent, wherein
the cellulose fibers have anionic groups, and the content of the anionic groups is 0.50 mmol/g or more,
the content of the cellulose fibers is 1% by mass or more, with respect to the total mass of the resin composition, and
the content of water is less than 10% by mass, with respect to the total mass of the resin composition.

4. The resin composition according to claim 3, wherein the organic onium ions satisfy at least one condition selected from the following (a) and (b):
(a) containing a hydrocarbon group having 4 or more carbon atoms, and
(b) having a total carbon number of 16 or more.

5. The resin composition according to claim 3 or 4, wherein a G value calculated according to the following equation is 0.9 or less: $G value = \left(Surface tension \left(mN/m\right) of resin composition\right) / \left(surface tension \left(mN/m\right) of organic solvent component comprised in resin composition\right) .$

6. A film comprising cellulose fibers having a fiber width of 1000 nm or less, organic onium ions, and a resin, wherein
the cellulose fibers have anionic groups, and the content of the anionic groups is 0.50 mmol/g or more, and
the content of the cellulose fibers is 4% by mass or more, with respect to the total mass of the film.

7. The film according to claim 6, wherein the content of the organic onium ions is 4% by mass or more, with respect to the total mass of the film.

8. The film according to claim 6 or 7, wherein the organic onium ions satisfy at least one condition selected from the following (a) and (b):
(a) containing a hydrocarbon group having 4 or more carbon atoms, and
(b) having a total carbon number of 16 or more.

9. A laminate obtained by forming the film according to any one of claims 6 to 8 on at least one surface of a base material.
